# EUROPEAN PATENT SPECIFICATION

(11) **EP 4 438 949 B1**
(45) Date of publication and mention of the grant of the patent: **24.12.2025**
(21) Application number: 24163367.6
(22) Date of filing: 13.03.2024
(51) Int. Cl.: F22B 1/18, F22B 37/10, F28D 7/00, F28D 1/047, F28D 7/08, F28D 21/00, F28F 1/32

(54) **LANE SWITCHING HEAT EXCHANGER**
WÄRMETAUSCHER MIT SPURWECHSEL
ÉCHANGEUR DE CHALEUR À COMMUTATION DE VOIE

(30) Priority: 31.03.2023 EP 23166204
(43) Date of publication of application: 02.10.2024
(73) Proprietor: GE Vernova Technology GmbH, 5400 Baden (CH)
(72) Inventor: RUCHTI, Christoph, 5400 Baden (CH); DIETZMANN, Kerstin, 5400 Baden (CH); SGAMBATI, Alessandro, 5400 Baden (CH)
(74) Representative: Novagraaf Group

(56) References cited:
- EP-A1- 2 345 841
- US-A- 4 627 386
- US-A1- 2013 227 946
- US-A1- 2017 010 053

## Description

### CROSS-REFERENCE TO RELATED APPLICATIONS

This application is a Continuation-in-Part Application of European Patent Application No. 23166204.0, filed March 31, 2023, entitled "LANE SWITCHING HEAT EXCHANGER,".

### BACKGROUND

The subject matter disclosed herein relates to heat exchangers, such as heat exchangers used for generating steam.

Heat exchangers are used for various applications to exchange heat between different fluid flows. In certain applications, the heat exchangers are used to transfer heat from a first fluid flow (e.g., a hot gas such as exhaust gas) to a second fluid flow (e.g., water) to generate steam. For example, in a combined cycle power plant (CCPP), a gas turbine system generates an exhaust gas, which is routed through a heat recovery steam generator (HRSG) to generate steam. The steam in turn is used to drive a steam turbine system. Heat exchangers, such as in HRSGs, may include a plurality of parallel tubes that extend across the first fluid flow, while the tubes carry the second fluid flow for heat exchange between the first and second fluids. Unfortunately, the heat exchange may vary across the various tubes of the heat exchangers, resulting in temperature variations in the second fluid flow in the tubes. These temperature variations are generally undesirable for the downstream equipment. As a result, the heat exchangers may require multiple passes of the second fluid flow through the tubes of the heat exchanger to help reduce the temperature variations. Heat exchangers, such as in HRSGs, also may be heavy due to the use of large tubes (e.g., 1.5 inch diameter tubes). The large tubes also can cause slower startup times for the CCPP. Accordingly, a need exists for improved heat exchangers with less weight, more uniform heat transfer, and less passes (e.g., once through) of the second fluid flow through the tubes of the heat exchanger.

US 2017/010053 A1 discloses a system and a method having the features of the preamble of independent claim 1 and 13, respectively.

US 2013/227946 A1 discloses a heat exchanger comprising a plurality of tubes arranged in a tube bundle, wherein successive tubing portions of each tube extend in opposite directions between first and second sides in a sequence and are offset both in a direction parallel to and in a direction orthogonal to the gas flow direction and tube bends, which connect successive tubing portions to each other, are at an angular position relative to one another, thus forming, in a sectional view, a configuration in the form of a zigzag.

US 4 627 386 A discloses tube bundles of a steam generator or boiler with tubes having successive tubing portions extending in opposite first and second directions and being offset both in a direction parallel to and in a direction orthogonal to the gas flow direction and connected by U-shaped end bends, resulting in a zigzag configuration of the tubing portions.

### BRIEF DESCRIPTION

Certain embodiments commensurate in scope with the originally claimed subject matter are summarized below. These embodiments are not intended to limit the scope of the claimed subject matter, but rather these embodiments are intended only to provide a brief summary of possible forms of the subject matter. Indeed, the present subject matter may encompass a variety of forms that may be similar to or different from the embodiments set forth below.

In a first embodiment, a system includes a heat exchanger having a plurality of tubes arranged in a tube bundle having opposite first and second sides, opposite third and fourth sides extending from the first side to the second side, and opposite fifth and sixth sides extending from the first side to the second side, where the fifth and sixth sides extend between the third and fourth sides. The heat exchanger further includes a plurality of external flow lanes extending across the tube bundle and between the fifth and sixth sides outside of the plurality of tubes. Each tube of the plurality of tubes includes a plurality of tubing portions extending in opposite first and second directions between the first and second sides in a sequence, and at least one successive tubing portion in the sequence switches lanes between the plurality of external flow lanes relative to a preceding tubing portion. At least one successive tubing portion of the plurality of tubing portions in the sequence is offset relative to the preceding tubing portion in a third direction from the sixth side to the fifth side of the tube bundle. At least one successive tubing portion of the plurality of tubing portions in the sequence switches lanes between the plurality of external flow lanes relative to the preceding tubing portion of the plurality of tubing portions by: shifting across one or more lanes of the plurality of external flow lanes in a fourth direction from the fourth side to the third side of the tube bundle; and reversing directions of lane shifting from the fourth direction to a fifth direction from the third side to the fourth side of the tube bundle upon reaching the third side.

In a second embodiment, a method includes assembling a plurality of tubes of a heat exchanger in a tube bundle having opposite first and second sides, opposite third and fourth sides extending from the first side to the second side, and opposite fifth and sixth sides extending from the first side to the second side, where the fifth and sixth sides extend between the third and fourth sides. The method further includes providing a plurality of external flow lanes extending across the tube bundle and between the fifth and sixth sides outside of the plurality of tubes and providing a lane switching arrangement of the plurality of tubes relative to the plurality of external flow lanes. The plurality of tubes includes a plurality of tubing portions extending in opposite first and second directions between the first and second sides in a sequence, where one or more successive tubing portions of the plurality of tubing portions in the sequence switches lanes between the plurality of external flow lanes relative to a preceding tubing portion of the plurality of tubing portions. At least one successive tubing portion of the plurality of tubing portions in the sequence is offset relative to the preceding tubing portion in a third direction from the sixth side to the fifth side of the tube bundle. At least one successive tubing portion of the plurality of tubing portions in the sequence switches lanes between the plurality of external flow lanes relative to the preceding tubing portion of the plurality of tubing portions by: shifting across one or more lanes of the plurality of external flow lanes in a fourth direction from the fourth side to the third side of the tube bundle; and reversing directions of lane shifting from the fourth direction to a fifth direction from the third side to the fourth side of the tube bundle upon reaching the third side.

**In** a third embodiment, a method of operating a system according to the invention as described above includes flowing a first fluid through the plurality of tubes of the heat exchanger in the tube bundle. The method further includes flowing a second fluid along the plurality of external flow lanes extending across the tube bundle and between the fifth and the sixth sides outside of the plurality of tubes and transferring heat between the first and second fluids via the lane switching arrangement of the plurality of tubes relative to the plurality of external flow lanes.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic diagram illustrating an embodiment of a CCPP having a gas turbine system, a steam turbine system, and a HRSG having one or more heat exchangers with a lane switching configuration of tubes, in accordance with an aspect of the present invention;
FIG. 2 is a schematic diagram illustrating an embodiment of the HRSG of FIG. 1, illustrating a high-pressure section, an intermediate-pressure section, and a low-pressure section, having one or more heat exchangers with a lane switching configuration of tubes, in accordance with an aspect of the present invention;
FIG. 3 is a perspective view of an embodiment of one of the heat exchangers of the HRSG of FIGS. 1 and 2, in accordance with an aspect of the present invention;
FIG. 4 is a schematic view of an embodiment of a HRSG having one or more modules, in accordance with an aspect of the present invention;
FIG. 5 is a schematic view of an embodiment of a portion of the HRSG of FIG. 4, in accordance with an aspect of the present invention;
FIG. 6A is a schematic view of an embodiment of a first side of the heat exchanger of FIG. 3, in accordance with an aspect of the present invention;
FIG. 6B is a schematic view of an embodiment of a second side of the heat exchanger of FIG. 3, in accordance with an aspect of the present invention;
FIG. 7 is a schematic view of an embodiment of the heat exchanger of FIG. 3, in accordance with an aspect of the present invention;
FIG. 8 is a perspective view of an embodiment of a coupling used to couple respective tubing portions in a sequence along the first and second sides of the heat exchanger of FIGS. 1-7, in accordance with an aspect of the present invention; and
FIG. 9 is a schematic view of an embodiment of a support plate of the heat exchanger of FIG. 3, in accordance with an aspect of the present invention.

### DETAILED DESCRIPTION

One or more specific embodiments of the present heat exchanger, a method for its assembly, and a method for its operation will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Embodiments of the present invention include a heat recovery steam generator (HRSG) having one or more heat exchangers, where each heat exchanger includes a tube bundle having a plurality of tubes. During operation of the HRSG, liquid (e.g., water) may be routed through the tubes and may be heated by exhaust gases flowing across the plurality of tubes in each tube bundle. As the exhaust gas flows across the tubes, the liquid may be heated toward an operating temperature of the liquid, thereby generating steam. The generated steam may then be directed to a steam turbine to drive a load.

Certain of the heat exchangers of the presently disclosed HRSGs may be assembled such that each tube of the plurality of tubes in a respective tube bundle has a number of tubing portions that pass back and forth between a first side and a second side of the heat exchanger in a lane switching configuration of the tubes. The tubing portions may be arranged in sequence such that each successive tubing portion is spaced from a preceding tubing portion in a first direction along a first axis relative to the heat exchanger. For example, a portion of the tubes in a heat exchanger may extend from an inlet header positioned on a first side (e.g., front side) of the heat exchanger proximate a third side (e.g., upper side) of the heat exchanger to an outlet header positioned on the second side (e.g., rear side) of the heat exchanger proximate a fourth side (e.g., lower side) of the heat exchanger. Accordingly, each successive tubing portion in a respective tube may be spaced from a preceding tubing portion along a vertical axis in a downward direction. Thus, liquid directed through a respective tube of the heat exchanger may pass back and forth between the first and second sides of the heat exchanger via each successive tubing portion and may generally be directed along the vertical axis of the heat exchanger in a downward direction from the third side to the fourth side of the heat exchanger.

Additionally, in certain embodiments, one or more successive tubing portions in a respective tube may be spaced from a preceding tubing portion in a second direction along a second axis relative to the heat exchanger. That is, certain successive tubing portions in a respective tube may be spaced differently from fifth and sixth sides (e.g., lateral sides) of the heat exchanger relative to preceding tubing portions in a respective tube such that one or more successive tubing portions are positioned in a different external flow lane of exhaust gas directed across the tube bundle of the heat exchanger. For example, in certain embodiments, exhaust gas may flow across a respective heat exchanger in a vertical direction through a plurality of external flow lanes. As discussed herein, an "external flow lane" may refer to a lane or passage that is external to (e.g., extends around) the tubes of the heat exchanger and is configured to receive and/or direct exhaust gas therethrough to exchange heat with the water directed through an interior of the tubes of the heat exchanger. Thus, the external flow lanes discussed herein may extend in a direction (e.g., vertical direction) along a vertical axis of the heat exchanger, thereby enabling the external flow lanes to receive and direct exhaust gas therethrough and around (e.g., across) the tubes of the heat exchanger to place the liquid flowing through the tubes of the heat exchanger in a heat exchange relationship with the exhaust gas (e.g., to generate steam). Using the example above, as each tube extends back and forth between the first and second sides (e.g., front and back sides) of the heat exchanger from the upper side to the lower side of the heat exchanger, one or more successive tubing portions may also be spaced from a preceding tubing portion in a lateral direction along a horizontal axis of the heat exchanger. That is, certain successive tubing portions of a tube may be positioned in a different location relative to the lateral sides of the heat exchanger such that at least one tubing portion of a respective tube is positioned in a different external flow lane of exhaust gas flowing vertically through the heat exchanger relative to another tubing portion of the respective tube.

As liquid is directed through a respective heat exchanger (e.g., directed through the tubes of the heat exchanger), at least a portion of the tubes of the heat exchanger directing the liquid therethrough may switch across external flow lanes of the exhaust gas (e.g., lane switching configuration of tubes), thereby resulting in increased uniformity of the heat transfer from the exhaust gas to the liquid. In this way, the liquid may undergo a phase change (e.g., from liquid to steam) in a single pass of the liquid through a respective tube of the heat exchanger, thereby resulting in increased efficiency of the HRSG. Thus, the heat exchangers disclosed herein may be referred to as "once through heat exchangers," which is indicative of heat exchangers that enable a liquid to reach a desired operating temperature (e.g., temperature at which the liquid vaporizes into steam) during a single pass through the heat exchange tubes of the heat exchanger.

In certain embodiments, each of the tubes of a respective heat exchanger employed by the HRSG may include fins (e.g., annular or disc-shaped fins) extending radially from a central axis of a respective heat exchange tube. The fins may be laser welded or may be coupled to the heat exchange tube via other fastening means. The fins may be configured to increase a surface area of a respective tube such that additional heat exchange may occur between the exhaust gases passing across the heat exchange tube (e.g., exhaust gases flowing through the external flow lanes) and the liquid within the heat exchange tube. That is, by assembling the heat exchange tubes with the fins as disclosed herein, additional heat transfer between the exhaust gases directed through the external flow lanes and across the heat exchange tubes of the HRSG and the liquid flowing within the heat exchange tubes may be accomplished. In certain embodiments, the tubes may also be sized smaller, such as less than or equal to ¾ inch, 7/8 inch, or 1 inch in diameter (respectively, 1.90 cm, 2.22 cm, or 2.54 cm in diameter). The use of laser welding to attach the fins to the tubes helps to enable use of the smaller diameter tubes, which in turn improves the heat transfer in the heat exchanger.

Additionally, in order to enable the lane switching configuration discussed above, successive tubing portions in a tube sequence may be coupled to one another by a coupling (e.g., U-shaped coupling, U-shaped bend), that enables the heat exchange tubes to switch between the external flow lanes of the exhaust gas. Accordingly, the disclosed embodiments may enable improved temperature distribution and more rapid heating of water to produce steam, which may further improve startup procedures for the CCPP.

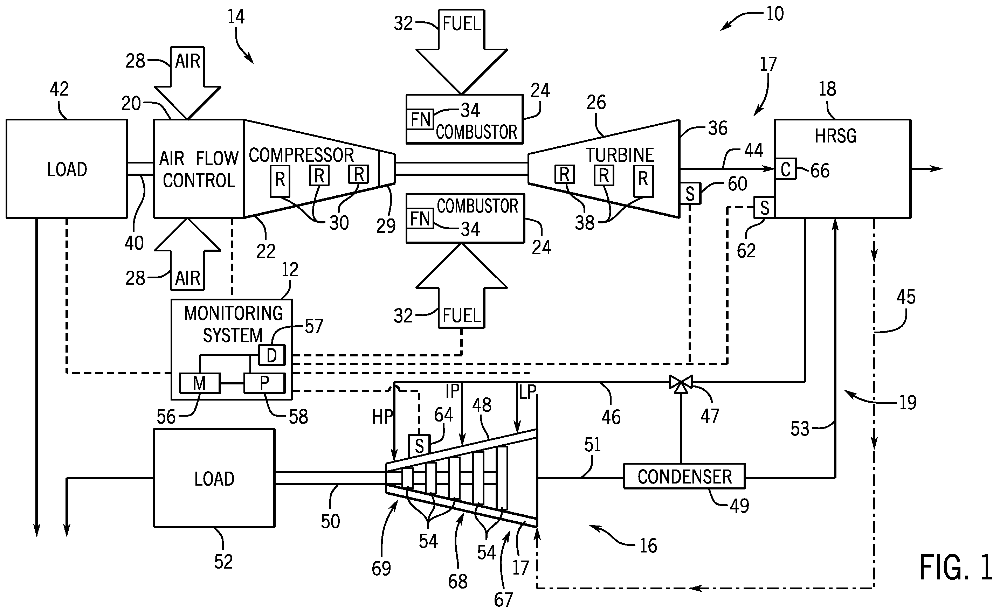

By way of introduction, FIG. 1 is a schematic diagram of an embodiment of a combined cycled power plant (CCPP) 10. In the illustrated embodiment, the CCPP 10 includes a gas turbine system 14, a steam turbine system 16, and a heat recovery steam generator (HRSG) 18 disposed between the gas turbine system 14 and the steam turbine system 16. The HRSG 18 is generally configured to enable heat transfer from an exhaust gas 44 of the gas turbine system 14 to a fluid (e.g., water 53) of the steam turbine system 16, thereby generating steam 46 for use in the steam turbine system 16. These and other features will be described in detail below.

The gas turbine system 14 may include an airflow control module 20, a compressor 22, a combustor 24, and a turbine 26. In operation, an oxidant 28 (e.g., air, oxygen, oxygen enriched air, or oxygen reduced air) enters the turbine system 14 through the airflow control module 20, which controls the amount of oxidant flow (e.g., airflow). The airflow control module 20 may control airflow by heating the oxidant flow, cooling the oxidant flow, extracting airflow from the compressor 22, using an inlet restriction, using an inlet guide vane, or a combination thereof. As the air passes through the airflow control module 20, the air enters the compressor 22. The compressor 22 pressurizes the air 28 in a series of compressor stages (e.g., rotor disks 30) with compressor blades. After the air 28 is pressurized, the pressurized air may reside in a compressor discharge chamber 29 before the compressed air exits the compressor 22.

After the compressed air exits the compressor 22, the air enters the combustor 24 and mixes with a fuel 32. The gas turbine system 14 may use liquid or gas fuel, such as natural gas and/or a hydrogen rich synthetic gas, to run the gas turbine system 14. For example, the fuel nozzles 34 may inject a fuel-air mixture into the combustor 24 in a suitable ratio for optimal combustion, emissions, fuel consumption, and power output. As depicted, multiple fuel nozzles 34 intake the fuel 32, mix the fuel 32 with air, and distribute the fuel-air mixture into the combustor 24. The fuel-air mixture combusts in a combustion chamber within combustor 24, thereby creating combustion gases. The combustor 24 directs the combustion gases through an expansion turbine 26 toward an exhaust outlet 36. As the combustion gases pass through the expansion turbine 26, the combustion gases contact turbine blades attached to turbine rotor disks 38 (e.g., turbine stages). As the combustion gases travel through the turbine 26, the combustion gases force turbine blades to rotate the rotor disks 38. The rotation of the rotor disks 38 induces rotation of at least one shaft 40, and of the rotor disks 30 in the compressor 22 (e.g., which may be rotatably coupled with the shaft 40). A load 42 (e.g., electrical generator) connects to the shaft 40 and uses the rotation energy of the shaft 40 to generate electricity for use by a power grid. As the expansion turbine 26 extracts energy from the combustion gases, the combustion gases expand and become exhaust gas 44, and the exhaust gas 44 exits the expansion turbine 26 through the exhaust gas outlet 36.

The exhaust gas 44 may then be routed from the exhaust gas outlet 36 (e.g., of the expansion turbine 26) to a first flow path 17 of the HRSG 18. In general, the HRSG 18 may also receive, in a second flow path 19, a fluid (e.g., water 53) from the steam turbine system 16 and/or a water supply. The first flow path 17 and the second flow path 19 may be disposed adjacent to each other. Accordingly, the water 53 may be heated by the exhaust gas 44 until the water 53 is converted to steam 46 (e.g., for use in the steam turbine system 16). In certain embodiments, the HRSG 18 may generate auxiliary steam 45 for a secondary process. By generating auxiliary steam 45 for a secondary process (e.g., during shutdown and/or start-up modes), the HRSG 18 may be utilized productively even when the CCPP 10, including the HRSG 18, is not in a normal operating mode.

Continuing with the illustrated embodiment, the primary steam 46 generated by the HRSG 18 (e.g., during the normal operating mode) and described above may be routed to the steam turbine system 16. The steam turbine system 16 may include a turbine 48, a shaft 50, and a load 52 (e.g., electrical generator). As the hot pressurized steam 46 enters the steam turbine 48, the steam 46 contacts turbine blades attached to turbine rotor disks 54 (e.g., turbine stages). As the steam 46 passes through the turbine stages in the turbine 48, the steam 46 induces the turbine blades to rotate the rotor disks 54. The rotation of the rotor disks 54 induces rotation of the shaft 50. As illustrated, the load 52 (e.g., electrical generator) connects to the shaft 50. Accordingly, as the shaft 50 rotates, the load 52 (e.g., electrical generator) uses the rotational energy to generate electricity for the power grid. As the pressurized steam 46 passes through the turbine 48, the steam 46 loses energy (i.e., expands and cools). After exiting the steam turbine 48, the steam exhaust 51 enters a condenser 49, where the steam exhaust 51 may become liquid water 53, for delivery to the HRSG 18. The liquid water 53 is then reheated (e.g., at the HRSG 18) for reuse in the steam turbine system 16. In certain embodiments, the steam turbine system 16 may include a low-pressure section 67 configured to receive low-pressure steam from the HRSG 18, an intermediate-pressure section 68 configured to receive intermediate-pressure steam from the HRSG 18, and a high-pressure section 69 configured to receive high-pressure steam from the HRSG 18, as described in greater detail below.

As shown, the CCPP 10 may also include a monitoring system 12 that monitors operations performed by the CCPP 10. In some embodiments, the monitoring system 12 may be incorporated into (or include) a controller of the CCPP 10 to control the operations performed by the CCPP 10 (e.g., increasing power output or decreasing power output from the gas turbine system 14 and/or the steam turbine system 16 of the CCPP 10). Generally, the monitoring system 12 may include a memory 56, display 57, and a processor 58. The memory 56 includes tangible, non-transitory, computer-readable media that stores instructions and steps written in software code. The display 57 may include a liquid crystal display (LCD), an electroluminescent display (ELD), a cathode ray tube display (CRT), and/or a light emitting diode (LED) display among many other display options for relaying information about the CCPP 10. The processor 58 executes the stored instructions in response to data received from the CCPP 10. More specifically, the monitoring system 12 may be incorporated in a controller that controls and communicates with various components in the CCPP 10 in order to flexibly control the loading of the gas turbine system 14, and thus the loading of the steam turbine system 16. As illustrated, the controller may control the airflow control module 20, the intake of fuel 32, valve(s) 47, and a catalyst 66. Further, the monitoring system 12 may communicate with the load 42.

The combined cycle power plant 10 may also include various sensors for detecting and/or deriving various conditions within or around the combined cycle plant 10. For example, the sensors may measure temperatures at various locations using various temperature sensors, such as exhaust gas temperature sensor 60, HRSG steam temperature sensor 62, and steam turbine metal temperature sensor 64, and the like. Additionally or alternative, the sensors of the combined cycle power plant 10 may pertain to other operating parameters, such as pressure, vibration, flow rates, dynamics within the combined cycle power plant 10, valve detection (open or closed), speed, stress or strain, and/or other suitable parameters that may be measured indicating operation of the combined cycle power plant 10.

In accordance with present embodiments, the controller (e.g., the monitoring system 12) may receive data from the various sensors 60, 62, 64. The controller may determine, based at least in part on a portion of the data collected by one or more of the sensors 60, 62, 64, when the exhaust gas 44 is at an appropriate temperature for utilizing catalysts (e.g., to reduce emissions of the exhaust gas 44). In other words, the controller may determine when the CCPP 10 (or corresponding HRSG 18) has reached a normal operating mode based at least in part on a temperature of, for example, the exhaust gas 44 (or of a component of the HRSG 18, or the water routed through the HRSG 18, either of which may be indicative of the temperature of the exhaust gas 44). Once the temperature of the exhaust gas 44 and/or water 53 is appropriate, the catalyst 66 may become effective. However, in some embodiments, certain catalysts 66 (or corresponding parts) may require control by the monitoring system 12. For example, the catalyst 66 (e.g., SCR catalyst) may require injection of ammonia (or other reagent) into the exhaust gas 44. Accordingly, the monitoring system 12 (or controller thereof) may receive sensor feedback indicative of a temperature of the exhaust gas 44 and may instruct the catalyst 66 (or a corresponding component upstream of the catalyst 66) to inject the ammonia (or other reagent).

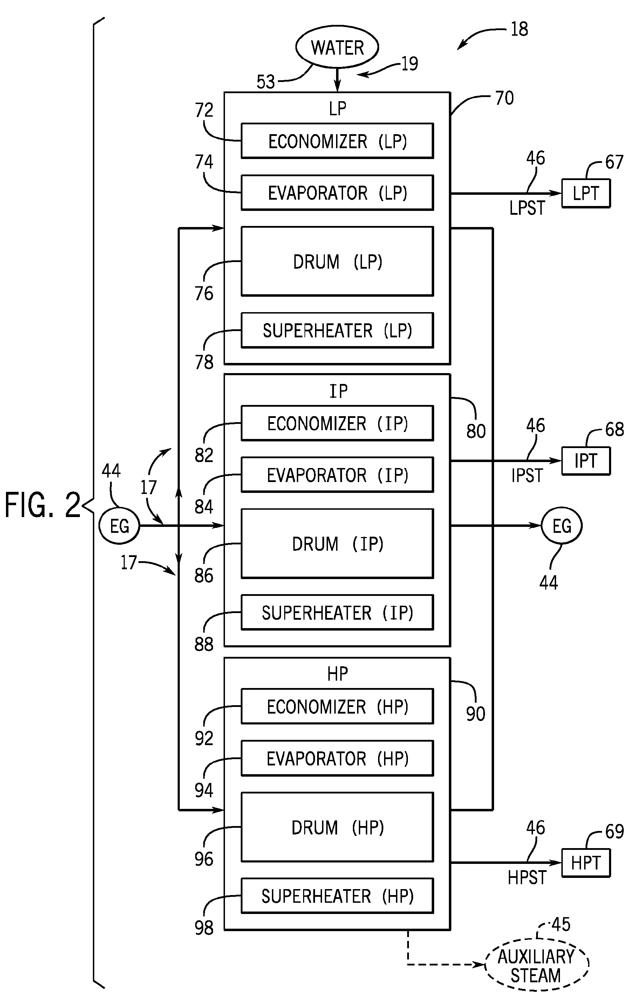

FIG. 2 is a schematic diagram illustrating the HRSG 18 containing a low-pressure (LP) section 70, an intermediate-pressure (IP) section 80, and a high-pressure (HP) section 90. The components of the HRSG 18 in the illustrated embodiment are simplified and are not intended to be limiting. Rather, the illustrated HRSG 18 is shown to convey the general operation of certain HRSG systems. As discussed above, exhaust gas 44 may be routed into the HRSG 18 via a first flow path 17 and used to heat water 53 (e.g., to generate steam 46), where the water 53 is routed to the HRSG 18 via a second flow path 19. The exhaust gas 44 may heat the water 53 in the low-pressure section 70, the intermediate-pressure section 80, and the high-pressure section 90 of the HRSG 18.

For example, in certain embodiments, the HRSG 18 may be a vertically oriented HRSG having the high-pressure section 90, the intermediate-pressure section 80, and the low-pressure section 70 stacked vertically such that the low-pressure section 70 is positioned higher relative to gravity than the high-pressure section 90. Each of the heat exchangers in the HRSG 18 may include tubes extending in a horizontal direction relative to gravity, and exhaust gas 44 may be directed vertically through the HRSG 18 (e.g., along external flow lanes) to transfer heat to the liquid passing through the heat exchangers, thereby generating steam 46.

In other embodiments, the HRSG 18 may be a horizontally oriented HRSG having the high-pressure section 90, the intermediate-pressure section 80, and the low-pressure section 70 arranged along a horizontal axis. Each of the heat exchangers of the HRSG 18 may include tubes extending in a vertical direction or a horizontal direction relative to gravity, and exhaust gas 44 may be directed horizontally through the HRSG 18 to convert the liquid passing through the HRSG 18 to steam. In embodiments in which the HRSG 18 is a horizontally oriented HRSG having heat exchange tubes extending in a horizontal direction relative to gravity, the exhaust gas 44 may be directed across the heat exchange tubes in a horizontal direction that is crosswise to the direction in which the heat exchange tubes extend.

As illustrated in no particular order, the low-pressure (LP) section 70 includes an LP economizer 72, an LP evaporator 74, an LP drum 76, and an LP superheater 78. The LP economizer 72 may be a device configured to pre-heat the water 53 to prepare the water 53 for receiving heat from the exhaust gas 44. For example, economizers may generally pre-heat the water 53 to a suitable temperature for controlling an amount of heat to generate the steam 46. The LP economizer 72 may then direct the pre-heated water 53 to other components of the HRSG 18, for example, the LP drum 76. The LP drum 76 may be a storage container that feeds the water 53 to the LP evaporator 74. The LP evaporator 74 may receive the pre-heated water 53 to further heat the water 53 to generate steam 46 (e.g., low-pressure steam, as the pre-heated water 53 may experience a phase change from a liquid to a gas inside the evaporator). In some embodiments, the water 53 may be in a vapor form before, during, or after being heated by the exhaust gas 44 in the LP evaporator 74. The low-pressure steam 46 may then be received by the LP superheater 78, which may convert saturated low-pressure steam 46 produced by the LP evaporator 74 into superheated or dry steam (e.g., the steam 46). After passing through the LP superheater 78, the low-pressure steam 46 may be directed to the low-pressure section 67 of the steam turbine system 16.

As illustrated, the intermediate-pressure (IP) section 80 may include an IP economizer 82, an IP evaporator 84, an IP drum 86, and an IP superheater 88. The IP economizer 82, the IP evaporator 84, the IP drum 86, and the IP superheater 88 may have similar functionality as the LP economizer 72, the LP evaporator 74, the LP drum 76, and the LP superheater 78, respectively. Thus, the IP evaporator 84 may receive pre-heated water 53 (e.g., pre-heated by the IP economizer 82) to further heat the water 53 to generate steam 46 (e.g., intermediate-pressure steam). The intermediate-pressure steam 46 may then be received by the IP superheater 88, which may convert saturated intermediate-pressure steam produced by the IP evaporator 84 into superheated or dry steam (e.g., the steam 46). After passing through the IP superheater 88, the intermediate-pressure steam 46 may be directed to the intermediate-pressure section 68 of the steam turbine system 16.

As illustrated, the high-pressure (HP) section 90 includes an HP economizer 92, an HP evaporator 94, an HP drum 96, and an HP superheater 98. The HP economizer 92, the HP evaporator 94, the HP drum 96, and the HP superheater 98 may have similar functionality as the LP economizer 72, the LP evaporator 74, the LP drum 76, and the LP superheater 78, respectively. Thus, the HP evaporator 94 may receive pre-heated water 53 (e.g., pre-heated by the HP economizer 92) to further heat the water 53 to generate steam 46 (e.g., high-pressure steam). The high-pressure steam 46 may then be received by the HP superheater 98, which may convert saturated high-pressure steam produced by the HP evaporator 94 into superheated or dry steam (e.g., the steam 46). After passing through the HP superheater 98, the high-pressure steam 46 may be directed to the high-pressure section 69 of the steam turbine system 16. Each of the foregoing components of the HRSG 18, including heat exchangers in the LP section 70, the IP section 80, and the HP section 90, may include heat exchanger tubes arranged in a lane switching configuration as discussed in further detail below. Further, in certain embodiments, multiple of the heat exchangers of a particular section may be arranged in a single tube bundle having a lane switching configuration. For example, as discussed in greater detail below, the HP economizer 92, the HP evaporator 94, and the HP superheater 98 may all be combined into a single tube bundle having a lane switching arrangement to facilitate heat transfer between exhaust gas flowing across the tubes of the tube bundle and the liquid directed through the tubes of the tube bundle (e.g., to facilitate the generation of steam using a single pass through the tubes of the tube bundle having the lane switching arrangement). Further still, in certain embodiments, certain components of a particular pressure section may be located within a different pressure section. That is, the tubes of certain of the components associated with a particular pressure section 70, 80, 90 may be interlaced and/or may extend within a different pressure section. For example, while the IP superheater 88 is illustrated as being located within the IP pressure section 80, in certain embodiments, tubes of the IP superheater 88 may extend through the HP pressure section 90 and may be interlaced with tubes of the HP economizer 92 and/or the HP evaporator 94, as described in greater detail below.

**In** certain embodiments, the HRSG 18 may be arranged with recirculating evaporator flows through each of the LP evaporator 74, IP evaporator 84, and HP evaporator 94. For example, each of the LP drum 76, the IP drum 86, and the HP drum 96 may be configured to store water 53 and the water 53 may be directed to the LP evaporator 74, the IP evaporator 84, and the HP evaporator 94. As the water 53 travels through each of the LP evaporator 74, the IP evaporator 84, and the HP evaporator 94, the water 53 may be recirculated through the respective evaporator. For example, upon making a pass through a particular evaporator of the HRSG 18, the water 53 may be directed back to an inlet header of the respective evaporator, thereby enabling the water 53 to make an additional pass through the evaporator. In this way, the water 53 may be heated to a sufficient temperature, thereby enabling generation of steam for operation of the steam turbine system 16.

**In** other embodiments, the HRSG 18 may be arranged without certain components described above. For example, in some embodiments, the LP drum 76, the IP drum 86, and the HP drum 96 may omitted. In such embodiments, the evaporators of the HRSG 18 (e.g., LP evaporator 74, IP evaporator 84, HP evaporator 94) may operate to direct water from an inlet header to an outlet header, and the tubes of a respective evaporator may be arranged such that water is heated to a sufficient temperature in a single pass through the respective evaporator (e.g., once-through evaporator), as described in greater detail below. That is, in certain embodiments, the LP evaporator 74, the IP evaporator 84, and the HP evaporator 94 may be recirculating evaporators that are configured to recirculate water therethrough to heat the water to a sufficient temperature, thereby enabling generation of steam. In other embodiments, the LP evaporator 74, the IP evaporator 84, and the HP evaporator 94 may be once through evaporators that are configured to heat the water to sufficient temperature in a single pass of the water 53 from an inlet header of a respective evaporator to an outlet header of a respective evaporator, as described in greater detail below.

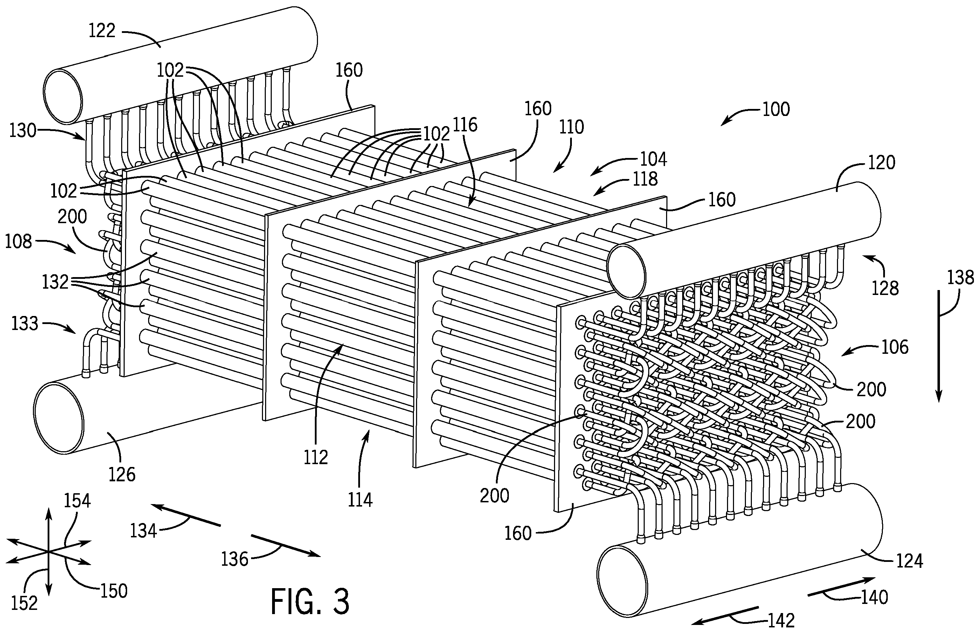

**FIG.** 3 is a perspective view of an embodiment of a heat exchanger 100 of the HRSG 18 of FIG. 2. For example, the heat exchanger 100 may correspond to the LP evaporator 74, the IP evaporator 84, and/or the HP evaporator 94 of FIG. 2 as discussed above. In certain embodiments, the heat exchanger 100 may correspond to a pressure section (e.g., low pressure section 70, intermediate pressure section 80, high pressure section 90) and may include multiple heat exchange components as discussed above. For example, in some embodiments, the heat exchanger 100 may include an economizer (e.g., LP economizer 72, IP economizer 82, HP economizer 92), a once through evaporator (e.g., LP evaporator 74, IP evaporator 84, HP evaporator 94) and a superheater (e.g., LP superheater 78, IP superheater 88, HP superheater 98) of a single pressure level (LP section 70, IP section 80, HP section 90). Thus, the heat exchanger 100 includes a plurality of interlaced heat exchange tubes 102 arranged in a tube bundle 104.

The tube bundle 104 may be configured in a lane switching arrangement that enables the heat exchange tubes 102 to pass back and forth between different exhaust gas flow lanes (e.g., external flow lanes), thereby enabling a homogenous distribution of flow and temperature across the heat exchange tubes 102, as described herein. As illustrated, the tube bundle 104 may include a first side 106 (e.g., front side), a second side 108 (e.g., back side, rear side) opposite the first side 106, a third side 110 (e.g., lateral side) extending from the first side 106 to the second side 108, a fourth side 112 opposite the third side 110 and extending from the first side 106 to the second side 108, a fifth side 114 (e.g., bottom side) extending from the first side 106 to the second side 108 and extending between the third side 110 and the fourth side 112, and a sixth side 116 (e.g., top side) opposite the fifth side 114 and extending from the first side 106 to the second side 108 and between the third side 110 and the fourth side 112. Thus, each of the tubes 102 in the tube bundle 104 may be disposed within an interior volume 118 defined by the sides 106, 108, 110, 112, 114, 116 of the tube bundle 104.

The heat exchanger 100 may also include a pair of inlet headers 120, 122 positioned on opposite first and second sides 106, 108 and proximate to the sixth side 116 of the tube bundle 104. The inlet headers 120, 122 may be configured to receive pre-heated liquid (e.g., pre-heated water 53) from a respective economizer (e.g., LP economizer 72, IP economizer 82, HP economizer 92) and direct the pre-heated liquid through the heat exchange tubes 102 of the heat exchanger 100. As noted above, as the liquid passes through the heat exchange tubes 102, exhaust gas 44 directed across the heat exchange tubes 102 (e.g., exhaust gas flowing through external flow lanes) may transfer heat to the liquid, thereby generating steam within the heat exchange tubes 102. The generated steam may then be directed through a pair of outlet headers 124, 126 positioned on opposite first and second sides 106, 108 and proximate the fifth side 114 of the tube bundle 104. The outlet headers 124, 126 are configured to discharge the steam from the heat exchanger 100 at a desired pressure (e.g., low-pressure steam, intermediate-pressure steam, high-pressure steam) and direct the steam toward the steam turbine system 16. In certain embodiments, the outlet headers 124, 126 may direct the steam to a superheater (e.g., LP superheater 78, IP superheater 88, HP superheater 98) to remove excess moisture, thereby generating superheated and/or dry steam which may be used by the steam turbine system 16.

Further, as noted above, in certain embodiments, each of the economizer and superheater of a particular section (LP section 70, IP section 80, HP section 90) may be arranged within the tube bundle 104. Using the HP section 90 as an example, the inlet headers 120, 122 of the tube bundle 104 may direct water 53 into the HP economizer 92, which may be in fluid communication with the heat exchange tubes 102 of the HP evaporator 94, and thus, the HP economizer 92 may direct water to the HP evaporator 94. Additionally, the HP superheater 98 may be in fluid communication with the HP evaporator 94, such that the HP superheater 98 receives steam from the HP evaporator 94. Upon superheating the steam received from the HP evaporator 94, the HP superheater 98 may direct the superheated steam toward the pair of outlet headers 124, 126, which, in turn, may direct the superheated steam toward the HP section 69. Thus, a particular tube bundle 104 may include multiple heat exchange tubes 102 from various heat exchange components (e.g., economizer, evaporator, superheater), and the heat exchange tubes 102 may be interlaced (e.g., arranged in a lane switching orientation), thereby enabling a homogenous distribution of low and temperature across the heat exchange tubes 102.

In the illustrated embodiment, the inlet header 120 is coupled to a first portion 128 (e.g., first mesh) of the plurality of tubes 102 at the sixth side 116 of the tube bundle 104 and the outlet header 126 is coupled to the first portion 128 of the plurality of tubes 102 at the fifth side 114 of the tube bundle 104. Similarly, the inlet header 122 is coupled to a second portion 130 (e.g., second mesh) of the plurality of tubes 102 at the sixth side 116 of the tube bundle 104 and the outlet header 124 is coupled to the second portion 130 of the plurality of tubes 102 at the fifth side 114 of the tube bundle 104. Thus, each tube 102 in the first and second portion 128, 130 may generally direct fluid (e.g., water) from the sixth side 116 to the fifth side 114 of the tube bundle 104 as each respective tube 102 passes back and forth between the first and second sides 106, 108 of the tube bundle 104. Further, it should be appreciated that the position and/or arrangement of each of the inlet headers 120, 122 and the outlet headers 124, 126 is not limited to the above example. For example, in certain embodiments, each of the inlet headers 120, 122 and the outlet headers 124, 126 may be positioned on the first side 106 of the tube bundle 104, each of the inlet headers 120, 122 and the outlet headers 124, 126 may be positioned on the second side 108 of the tube bundle 104, each of the inlet headers 120, 122 may be positioned on the first side 106 of the tube bundle 104 and each of the outlet headers 124, 136 may be positioned on the second side 108 of the tube bundle 104, or each of the inlet headers 120, 122 may be positioned on the second side 108 of the tube bundle 104 and each of the outlet headers 124, 126 may be positioned on the first side 106 of the tube bundle 104. Similarly, the arrangement and/or coupling of each of the portions 128, 130 of the plurality of tubes 102 to the respective inlet headers 120, 122 and outlet headers 124, 126 is not limited to the above example. For example, in certain embodiments, the first portion 128 of the plurality of tubes may be coupled to the inlet header 120 and the outlet header 124, while the second portion 130 of the plurality of tubes 102 may be coupled to the inlet header 122 and the outlet header 126.

Each tube 102 of the tube bundle 104 may include a plurality of tubing portions 132 arranged in a sequence 133 from a respective inlet header 120, 122 to a respective outlet header 124, 126. Each tubing portion 132 may extend along (e.g., parallel to) between the first and second sides 106, 108 of the tube bundle 104. In certain embodiments, each tubing portion 132 that is not directly coupled to the inlet headers 120, 122 or the outlet headers 124, 126 may be coupled to a preceding tubing portion 132 or a successive tubing portion 132 via a respective coupling 200 (e.g., U-shaped coupling, U-shaped bend, tubing bend portion). For example, a first tubing portion 132 in the sequence 133 may be coupled to the inlet header 120 and may extend in a first direction 134 from the first side 106 to the second side 108. A second tubing portion 132 in the sequence 133 may be coupled to the first tubing portion 132 proximate the second side 108 via a respective coupling 200, and the second tubing portion 132 may extend in a second direction 136 from the second side 108 to the first side 106. In certain embodiments, as each successive tubing portion 132 of a respective tube 102 passes back and forth in the first and second directions 134, 136 between the first and second sides 106, 108 of the tube bundle 104, each successive tubing portion 132 of the respective tube 102 may be spaced (e.g., offset) from a preceding tubing portion 132 in a third direction 138 from the sixth side 116 to the fifth side 114 of the tube bundle 104. Thus, the third direction 138 (e.g., downward direction) may extend crosswise to the first and second directions 134, 136 (e.g., horizontal direction). In this way, liquid directed through a respective tube 102 in the tube bundle 104 may generally travel in the third direction 138 as it passes back and forth in the first and second directions 134, 136 through successive tubing portions 132.

Additionally, in certain embodiments, each successive tubing portion 132 of a respective tube 102 may also be spaced (e.g., offset) from a preceding tubing portion 132 in a fourth direction 140 from the fourth side 112 to the third side 110 of the tube bundle 104 or a fifth direction 142 from the third side 110 to the fourth side 112 of the tube bundle 104. For example, a respective tube 102 may include a third tubing portion 132 in the sequence 133 extending in the first direction 134 from the first side 106 to the second side 108 of the tube bundle 104. A fourth tubing portion 132 in the sequence 133 that is offset from the third tubing portion 132 in the third direction 138 (e.g., first offset) may be coupled to the third tubing portion 132 via a respective coupling 200 (e.g., U-shaped coupling, U-shaped bend, tubing bend portion) and may extend in the second direction 136 from the second side 108 to the first side of the tube bundle 104. The fourth tubing portion 132 may also be offset from the third tubing portion 132 in the sequence 133 in the fourth direction 140 (e.g., second offset) from the fourth side 112 to the third side 110 of the tube bundle 104. Thus, the fourth and fifth directions 140, 142 may be parallel to one another and may also extend crosswise (e.g., perpendicular) to the first and second directions 134, 136 and crosswise (e.g., perpendicular) to the third direction 138. Thus, as discussed in greater detail below, each successive tubing portion 132 of a respective tube 102 may be positioned in a different external flow lane of exhaust gas 44 directed across the heat exchanger 100, thereby defining a lane switching configuration of the tubes 102. In this way, as liquid is directed through a respective heat exchange tube 102, the liquid may experience exhaust gas flows having different properties (e.g., temperature and pressure) based on the particular location of the tubing portion 132 within the tube bundle 104 as successive tubing portions 132 in the sequence 133 are offset from preceding tubing portions 132 in multiple directions (e.g., third direction 138, fourth direction 140, fifth direction 142), thereby enabling a respective heat exchange tube 102 to switch between the external flow lanes of exhaust gas.

For example, in embodiments in which the heat exchanger 100 is a vertically oriented heat exchanger, each successive tubing portion 132 in the sequence 133 may extend along a longitudinal axis 150 of the heat exchanger 100. That is, the first and second directions 134, 146 may be horizontal directions that extend along the longitudinal axis 150. As a respective tube 102 extends back and forth between the first and second sides 106, 108, each successive tubing portion 132 in the sequence 133 may be offset from the preceding tubing portion 132 in the third direction 138 (e.g., downward direction) along a vertical axis 152 of the heat exchanger 100. In this way, a respective tube 102 in the tube bundle 104 may extend from a respective inlet header 120, 122 positioned proximate the sixth side 116 of the tube bundle 104 to a respective outlet header 124, 126 positioned proximate the fifth side 114 of the tube bundle 104 such that liquid directed through the respective tube 102 is generally directed in the third direction 138 (e.g., downward direction) toward the outlet headers 124, 126 to be discharged toward the steam turbine system 16.

Additionally, each successive tubing portion 132 in the sequence 133 may be offset from the preceding tubing portion in the fourth direction 140 or the fifth direction 142 (e.g., horizontal direction) along a lateral axis 154 of the heat exchanger 100. That is, each successive tubing portion 132 of a respective tube 102 may extend along the longitudinal axis 150 in both a different vertical plane and a different horizontal plane relative to the preceding tubing portion 132 of the respective tube 102. Thus, each successive tubing portion 132 of a respective tube 102 may be positioned in a different external flow lane of exhaust gas directed across the heat exchanger 100. In this way, liquid directed through a respective heat exchange tube 102 may undergo a phase change from liquid to steam in a single pass of the liquid from a respective inlet header 120, 122 to a respective outlet header 124, 126, thereby increasing the efficiency of the heat exchanger 100.

It should be appreciated that while the tubes 102 of the tube bundle 104 are described above as being associated with a sequence 133 in which each successive tubing portion 132 of a respective tube 102 is offset from a preceding tubing portion 132 in at least two directions (e.g., horizontal direction and a vertical direction, each respective tubing portion 132 in a sequence 133 is positioned in a different horizontal plane and a different vertical plane), in certain embodiments, one or more tubing portions 132 of a respective tube in a sequence 133 may be spaced (e.g., offset) from a preceding tubing portion 132 in only a single direction (e.g., horizontal direction, vertical direction). For example, in certain embodiments, one or more tubes 102 may have a first tubing portion 132 that extends in the first direction 134 from the first side 106 to the second side 108 and a second tubing portion 132 that extends in the second direction 136 from the second side 108 to the first side 106. However, the second tubing portion 132 may only be spaced (e.g., offset) from the first tubing portion 132 in the fourth direction 140 or the fifth direction 142. That is, the second tubing section 132 may not be spaced (e.g., offset) from the first tubing portion 132 in the third direction 138, and instead, may reside in the same horizontal plane as the first tubing portion 132. As another example, one or more tubes 102 may have a third tubing portion 132 that extends in the first direction 134 from the first side 106 to the second side 108, and a fourth tubing portion 132 that extends in the second direction 136 from the second side 108 to the first side 106. However, the fourth tubing portion 132 may only be spaced (e.g., offset) from the third tubing portion 132 in the third direction 138. That is, the fourth tubing portion 132 may not be spaced (e.g., offset) from the third tubing portion 132 in the fourth direction 140 or the fifth direction 142, and instead, may reside in the same vertical plane as the third tubing portion 132.

As noted above, successive tubing portions 132 in the sequence 133 may be coupled to preceding tubing portions 132 in the sequence by the coupling 200 at the first side 106 or the second side 108 of the tube bundle 104. The coupling 200 may be a tubing bend portion that enables a respective tube 102 to switch between external flow lanes of exhaust gas directed across the heat exchanger. For example, as noted above, each successive tubing portion 132 in the sequence 133 may be offset from the preceding tubing portion 132 in the sequence 133 in both the third direction 138 and/or the fourth or fifth direction 140, 142, thereby creating a lane switching configuration of the tubes 102. Thus, each coupling 200 may include a portion that extends at an angle between the third direction 138 and the fourth direction 140 or at an angle between the third direction 138 and the fourth or fifth direction 140, 142, thereby enabling successive tubing portions 132 in the sequence 133 to be offset from the preceding tubing portion 132 in the third direction 138 and the fourth direction 140 or the fifth direction 142.

In certain embodiments, the geometry of the coupling 200 may be dependent on the location of the respective tubing portions 132 that are to be coupled to one another, as described in greater detail below. In certain embodiments, the tube bundle 104 may also include a plurality of support plates 160 configured to support respective heat exchange tubes 102 within the tube bundle 104. For example, in the illustrated embodiment, the tube bundle 104 includes four support plates 160, which are axially spaced between the first side 106 and the second side 108. Each of the support plates 160 may include a plurality of openings (e.g., holes) through which respective tubes 102 pass. Each of the support plates 160 may include multiple sections configured to couple to one another to support the tube bundle 104, as discussed in greater detail below. It should be noted that while four support plates 160 are illustrated, the tube bundle 104 may include more or fewer (e.g., one, two, three, five, six, seven, or more) support plates 160, and a number of the support plates 160 used may be based on various characteristics of the tube bundle 104 (e.g., number of tubes, size of tubes, weight of tubes, etc.).

It should be noted that in certain embodiments, the HRSG 18 may include multiple tube bundles 104. For example, in embodiments in which the HRSG 18 includes the LP section 70, the IP section 80, and the HP section 90, the HRSG 18 may include three tube bundles 104 (one for each of the LP section 70, the IP section 80, and the HP section 90). Further, in certain embodiments, each of the tube bundles 104 may be interlaced with a second tube bundle 104. For example, the tube bundle 104 associated with the LP section 70 may be interlaced with the tube bundle 104 associated with the IP section 80 and the tube bundle 104 associated with the HP section 90.

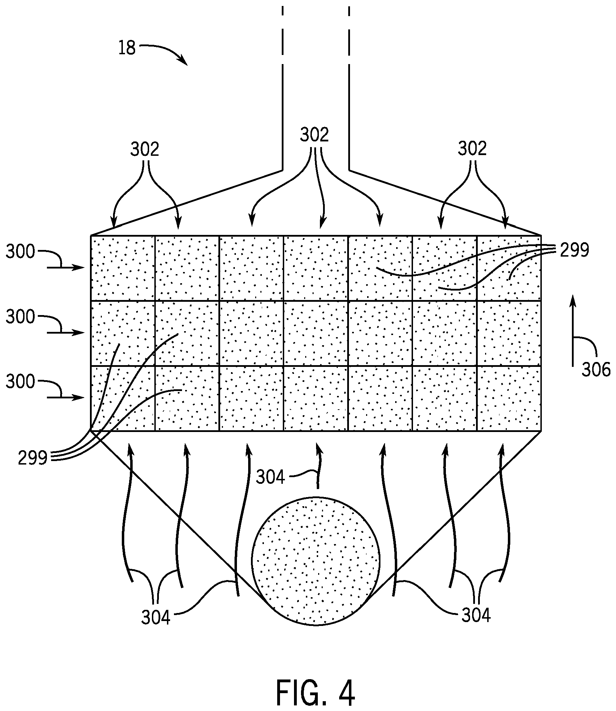

For example, FIG. 4 illustrates a schematic view of an embodiment of a HRSG 18 having a plurality of modules 299 arranged in a series of rows 300 and columns 302. Each module 299 in the top row 300 may correspond to a LP section 70, each module 299 in the middle row 300 may correspond to an IP section 80, and each module 299 in the bottom row 300 may correspond to a HP section 90. During operation of the HRSG 18, exhaust gas 304 may be directed into the HRSG 18 and may flow in a direction 306 (e.g., vertically upward direction) through the columns 302. In certain embodiments, the exhaust gas may be divided into separate streams and the number of exhaust gas streams may correspond to the number of columns 302 of modules 299 employed by the HRSG 18. Thus, in the illustrated embodiment, the exhaust gas may be divided into seven different streams and directed across the modules 299 within each column 300 in the direction 306. As the exhaust gas flows across each of the tubes and/or components within each module 299, the exhaust gas may transfer heat to liquid (e.g., water) flowing within the tubes, thereby enabling the generation of steam.

In certain embodiments, the tubes of a particular pressure section may be interlaced with the tubes of a different pressure section, and thus, each module 299 may include tubes from different pressure sections 70, 80, and 90. For example, the tubes of the LP section 70 within a particular column 302 may be interlaced with tubes of the IP section 80 within the respective column 302 and/or interlaced with tubes of the HP section 90 within the respective column 302. Further, in certain embodiments, one or more of the modules 299 within a particular row 300 may include components from a different pressure section (e.g., components from a pressure section associated with a different row 300). For example, as noted above, each of the modules 299 in the top row 300 may correspond to a LP section 70, each of the modules 299 in the middle row 300 may correspond to an IP section 80, and each of the modules 299 in the bottom row 300 may correspond to a HP section 90. However, in certain embodiments, the middle row 300 may include one or more high pressure section 90 components. For example, one or more of the modules 299 in the middle row 300 (e.g., modules 299 generally associated with an IP section 80) may include tubes from one or more HP economizers 92 configured to pre-heat liquid within the tubes before directing the pre-heated liquid toward the HP evaporators 94 disposed within each of the modules 299 in the bottom row 300 (e.g., each of the modules 299 associated with a HP section 90).

Similarly, one or more modules 299 in the top row 300 (e.g., modules 299 associated with a LP section 70) may include tubes from one or more HP economizers 92 configured to pre-heat liquid within the tubes before directing the pre-heated liquid toward the HP evaporators 94 disposed within each of the modules 299 in the bottom row 300 (e.g., each of the modules 299 associated with a HP section 90). The tubes of the HP economizers 92 disposed within each of the rows 300 associated with the LP section 70 and/or the IP section 80 may be interlaced with the tubes of the various components of the respective section (e.g., LP economizer 72, LP evaporator 74, LP superheater 78, IP economizer 82, IP evaporator 84, IP superheater 86) in which the HP economizer 92 is disposed. Further, the tubes of the HP economizers 92 may be fluidly coupled to the HP evaporators 94 within a respective column 302, and may be arranged and/or oriented in the lane switching arrangement discussed herein to facilitate heat exchange between the exhaust gas directed across the tubes and the liquid (e.g., water) directed through the tubes to generate steam. Thus, in certain embodiments, tubes 102 of a tube bundle 104 having a HP economizer 92, a HP evaporator 94, and an HP superheater 98 may extend across multiple pressure sections 70, 80, and 90 to generate stream.

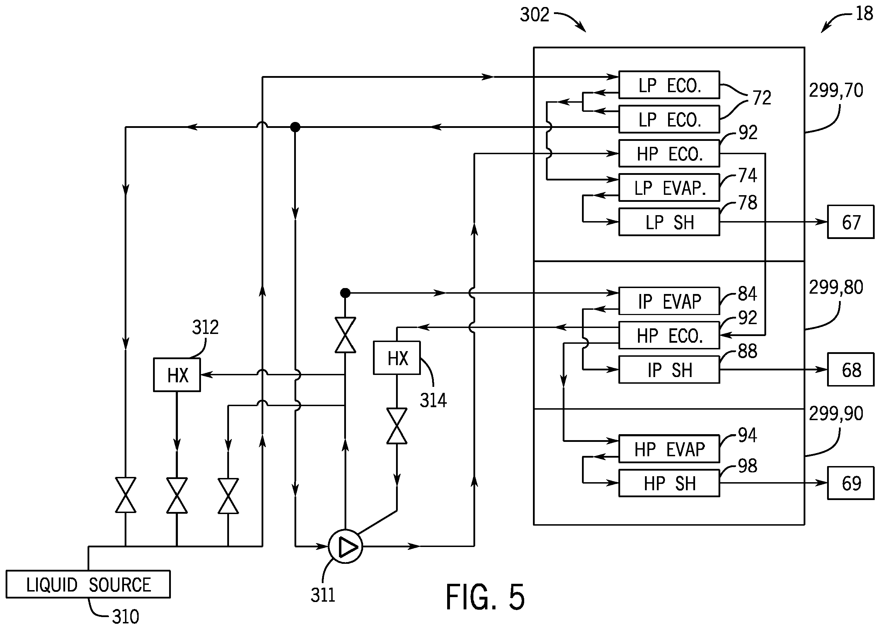

For example, FIG. 5 is a schematic diagram illustrating an embodiment of a portion of the HRSG 18 of FIG. 4 having a column 302 that includes three modules 299 arranged in a stacked vertical orientation. The top module 299 may correspond to the low-pressure section 70, the middle module 299 may correspond to the intermediate-pressure section 80, and the bottom module 299 may correspond to the high-pressure section 90 of FIG. 2. During operation of the HRSG 18, the tubes of the LP economizer(s) 72 of the LP section 70 may receive liquid (e.g., water) from a liquid source 310 and direct the liquid therethrough. A first portion of the liquid directed through the LP economizer(s) 72 may be discharged toward the tubes of the LP evaporator 74, while a second portion of the liquid directed through the LP economizer(s) may be discharged toward a pump 311. The tubes of the LP evaporator 74 may receive the first portion of liquid, direct the first portion of the liquid therethrough and discharge heated liquid toward the tubes of the LP superheater 78. The tubes of the LP superheater 78 may then receive and discharge the low-pressure superheated liquid (e.g., low-pressure steam) to the low-pressure section 67 of the steam turbine system 16.

The tubes of the IP evaporator 84 disposed within the IP section 80 may receive liquid from the liquid source 310 and/or the pump 311, direct the liquid therethrough and discharge the liquid toward the tubes of the IP superheater 88. For example, in certain embodiments, the IP section 80 may not include a IP economizer 82, and instead, the IP evaporator 84 may receive the second portion of liquid discharged from the LP economizer(s) 72. That is, the LP economizer(s) 72 may be configured to preheat liquid to a sufficient temperature before directing a portion of the liquid toward the IP evaporator 84 of the IP section 80. The tubes of the IP evaporator 84 may receive the liquid, direct the liquid therethrough, and discharge the liquid toward the tubes of the IP superheater 88. The tubes of the IP superheater 88 may then discharge the intermediate-pressure superheated liquid (e.g., intermediate-pressure steam) to the intermediate pressure section 68 of the steam turbine system 16. In certain embodiments, the pump 311 may discharge liquid directed toward the LP economizer(s) 72 through a heat exchanger 312 configured to pre-heat the liquid before delivering the liquid to various downstream components (e.g., the LP economizer(s) 72).

The tubes of the HP economizer(s) 92 may also receive liquid from the liquid source 310 and/or the pump 311, direct the liquid therethrough, and discharge the liquid toward the tubes of the HP evaporator 94. In certain embodiments, a portion of the liquid discharged from the HP economizer 92 disposed within the IP section 80 may be routed through a heat exchanger 314 configured to condition (e.g., heat) the liquid, before recirculating the portion of the liquid toward the HP economizer 92 disposed within the LP section 80 and/or the IP evaporator 84 disposed within the IP section 80. The tubes of the HP evaporator 94 may receive the liquid from the HP economizer(s) 92, direct the liquid therethrough, and discharge the liquid toward the tubes of the HP superheater 98. The tubes of the HP superheater 98 may then discharge the high-pressure superheated liquid (e.g., high-pressure steam) to the high-pressure section 69 of the steam turbine system 16.

As shown in the illustrated embodiment, certain components (e.g., economizer, evaporator, superheater) associated with a particular pressure section may extend through and/or be interlaced with various components of a different pressure section (e.g., a different module 299) to enable sufficient heat exchange between the exhaust gas routed across the tubes and the liquid directed through the tubes. For example, while the top module 299 is generally associated with a LP section 70 that includes a LP evaporator 74 and a LP superheater 78, in certain embodiments, tubes of the HP economizer 92 may extend through the LP section 70 (e.g., extend through the top module) and/or be interlaced with the tubes of the LP evaporator 74 and the LP superheater 78 to ensure that liquid having a desired temperature range is delivered to the HP evaporator 94 disposed within the HP section 90 (e.g., disposed within the bottom module 299). Thus, as noted above, in certain embodiments, a tube bundle 104 having a HP economizer 92, an HP evaporator 94, and an HP superheater 98 may extend across multiple pressure sections (e.g., may extend across multiple modules 299 within a particular column 300) to enable the generation of steam in a single pass through the tube bundle 104.

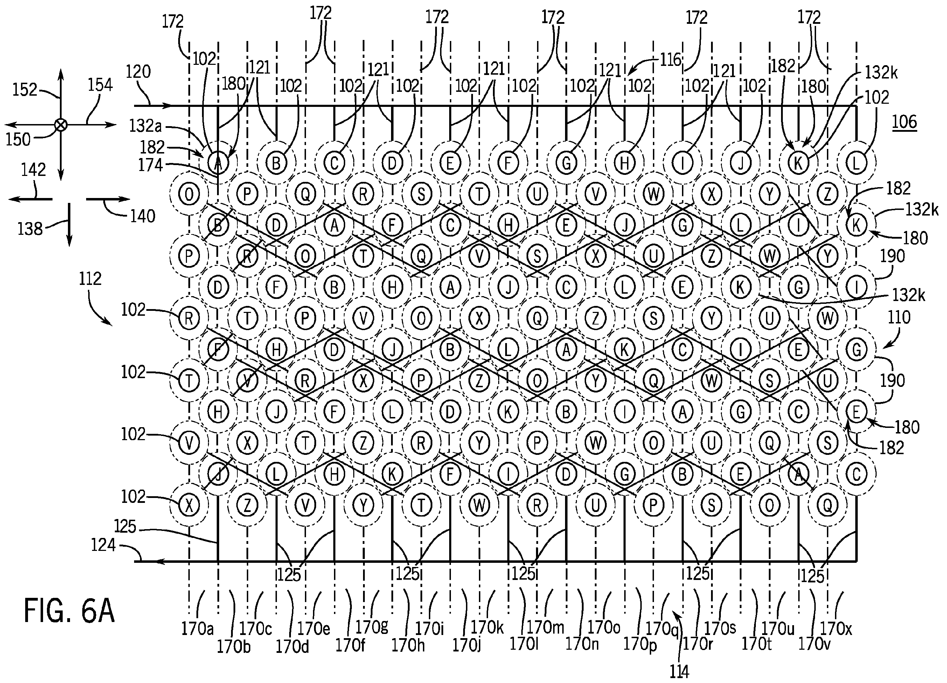

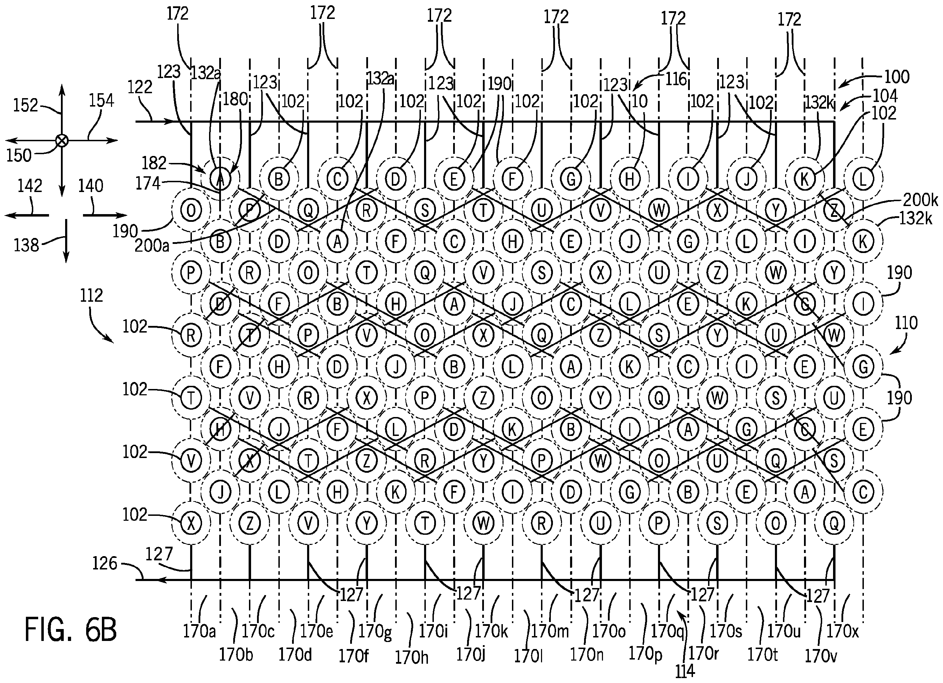

FIG. 6A illustrates a schematic view of an embodiment of the first side 106 of the tube bundle 104 of FIG. 3, and FIG. 6B illustrates a schematic view of an embodiment of the second side 108 of the tube bundle 104 of FIG. 3. As illustrated, the tube bundle 104 may include the plurality of tubes 102, where each tube 102 is associated with a respective letter. For example, tubes 102 in a first group (e.g., first portion 128) are identified with letters A through L (i.e., A, B, C, D, E, F, G, H, I, J, K, and L), whiles tubes in a second group (e.g., second portion 130) are identified with letters O through Z (i.e., O, P, Q, R, S, T, U, V, W, X, Y, and Z). As shown in FIG. 6A, a portion 121 of each of the tubes 102 of the first group (i.e., tubes A through L, tubes of the first portion 128) is coupled to the inlet header 120 (illustrated by solid lines) and a portion 125 of each of the tubes 102 of the first group (i.e., tubes A through L, tubes of the first portion 128) is coupled to the outlet header 124 (e.g., illustrated by solid lines). As shown in FIG. 6B, a portion 123 of each of the tubes 102 of the second group (i.e., tubes O through Z, tubes of the second portion 130) is coupled to the inlet header 122 (e.g., illustrated by solid lines) and a portion 127 of each of the tubes 102 of the second group (i.e., tubes O through Z, tubes of the second portion 130) is coupled to the outlet header 126 (e.g., illustrated by solid lines).

Further, as noted above, the heat exchanger 100 may include a plurality of external flow lanes 170 (e.g., labeled 170a through 170x in FIGS. 6A and 6B) through which exhaust gas flows across exterior surfaces of the heat exchange tubes 102 of the tube bundle 104. In certain embodiments, the external flow lanes 170 may extend in a direction (e.g., vertical direction) along the vertical axis 152 of the heat exchanger 100. As illustrated in FIGS. 6A and 6B, each external flow lane 170 is generally defined by a pair of planes 172 (e.g., illustrated by dashed lines) that extend from the first side 106 to the second side 108 of the tube bundle between the fifth side 114 and the sixth side 116 of the tube bundle 104. Each plane 172 may extend through a centerline 174 of each tube 102 in a direction along the longitudinal axis 150 such that each tubing portion 132 of a respective tube 102 resides in two adjacent external flow lanes 170. It should be noted that in certain embodiments, each tubing portion 132 of the plurality of tubes 102 includes a plurality of annular shaped fins 190 projecting from the tubing portion 132, and these fins 190 may at least partially define the spacing between the tubing portions 132 in the tube bundle 104.

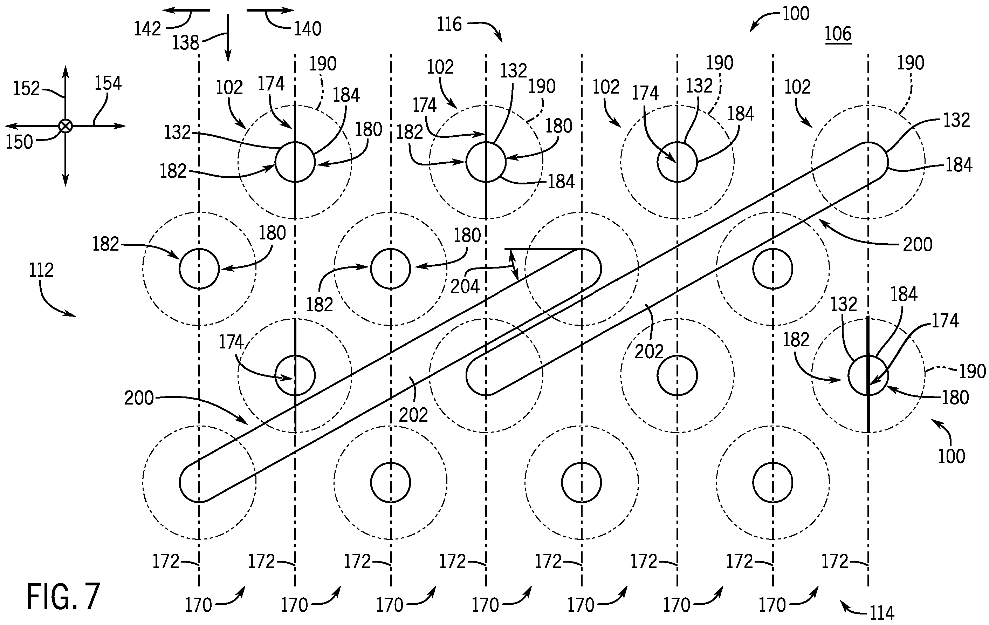

For example, as illustrated in FIG. 7, each tubing portion 132 of a respective tube 102 may include a first tubing side 180 facing the third side 110 of the tube bundle 104 and a second tubing side 182 facing the fourth side 112 of the tube bundle 104. The first tubing side 180 of the tubing portion 132 is in a different external flow lane 170 than the second tubing side 182 of the tubing portion 132. Additionally, FIG. 7 illustrates a plurality of fins 190 (e.g., annular or disc-shaped fins) extending from a respective tube 102 into one of more of the external flow lanes 170. For example, each of the plurality of fins 190 may be an annular fin extending radially outward from an annular outer surface 184 of each tubing portion 132 of the plurality of tubing portions 132. Each of the plurality of fins 190 on a respective tube 102 may be arranged in series lengthwise along the tube 102 as the respective tubing portion 132 of the tube 102 extends between the first and second sides 106, 108 of the tube bundle 104. Each of the plurality of fins 190 may be configured to increase the surface area of a respective tube 102 such that exhaust gas directed through respective external flow lanes and across the tube bundle 104 may contact the fins 190 and provide additional heat exchange to the fluid directed through a respective tube 102.

That is, by positioning the fins 190 about the annular outer surface 184 of each tubing portion 102, the exhaust gas directed across the tube bundle 104 may contact an increased amount of material such that an increased amount of heat may be transferred from the exhaust gas to the tubes 102 of the tube bundle 104 via the fins 190. In this way, liquid directed through a respective heat exchange tube 102 may receive increased amounts of heat from the exhaust gas compared to heat exchange tubes 102 that do not include the fins 190, thereby enabling the liquid to undergo a phase change from liquid to steam in a single pass through the heat exchanger 100 from a respective inlet header 120, 122 to a respective outlet header 124, 126.

In certain embodiments, the fins 190 may be laser welded to the tubes 102, which in turn, may enable smaller tubes to be used in the heat exchanger 100. For example, in certain embodiments, the tubes 102 in the tube bundle 104 may be sized less than or equal to ¾ inch, 7/8 inch, or 1 inch in diameter (respectively, 1.90 cm, 2.22 cm, or 2.54 cm in diameter). Additionally, the use of laser welding to attach the fins 190 to the annular outer surface 184 helps to enable use of the smaller diameter tubes 102, which in turn improves the heat transfer in the heat exchanger 100. Because there is greater surface area for heat transfer and less fluid passing through the smaller heat exchange tubes 102, the disclosed embodiments may enable improved temperature distribution and more rapid heating of water to produce steam, thereby improving startup procedures for the CCPP and efficiency of the CCPP.

Returning to FIGS. 6A and 6B and as noted above, each tube 102 may include a plurality of tubing portions 132 arranged in a sequence 133, where each successive tubing portion 132 in the sequence 133 passes to and from the first and second sides 106, 108, and is offset from a preceding tubing portion 132 in the third direction 138 from the sixth side 116 to the fifth side 114 and in the fourth direction 140 from the fourth side 112 to the third side 110 or the fifth direction 142 from the third side 110 to the fourth side 112. Thus, both tubing sides of a successive tubing portion 132 may be positioned in different external flow lanes 170 relative to the tubing sides of the preceding tubing portion 132 in the sequence 133.

For example, as illustrated in FIGS. 6A and 6B, the portion 121 of tube 102A is coupled to the inlet header 120 at the sixth side 116 of the tube bundle 104 at a location proximate the first side 106 and the fourth side 112 of the tube bundle 104. Upon reaching the second side 108 of the tube bundle 104, the first tubing portion 132a may couple to a second tubing portion 132a via a first coupling 200a (shown in FIG. 6B). The second tubing portion 132a may be offset from the first tubing portion 132a in the third direction 138 and in the fourth direction 140 such that the first and second tubing sides 180, 182 of the second tubing portion 132a are positioned in different external flow lanes 170 than the first and second tubing sides 180, 182 of the first tubing portion 132a. In certain embodiments, the coupling 200 between successive tubing portions 132 disposed between the third and fourth sides 110, 112 of the tube bundle 104 may enable successive tubing portions 132 to switch across at least two or more external flow lanes 170 such that first and second tubing sides 180, 182 of a successive tubing portion 132 are disposed in an external flow lane 170 that is not directly adjacent to an external flow lane 170 in which the first or second tubing sides 180, 182 of the first tubing portion 132 reside (e.g., lane switching configuration of tubes). For example, using tube 102A again, the first tubing side 180 of the first tubing portion 132a is positioned in a second external flow lane 170b, and the second tubing side 182 of the second tubing portion 132a is positioned in a fifth external flow lane 170e. Thus, the second tubing portion 132a is positioned in external flow lanes (e.g., external flow lane 170e, 170f) that are not directly adjacent to the external flow lanes 170a, 170b that the first tubing portion 132a is disposed in. In this way, the second tubing portion 132a is shifted across at least two external flow lanes (e.g., flow lane 170c, 170d) relative to the first tubing portion 132a in the sequence 133. Thus, as a respective tube 102 shifts by a first offset between the sixth and fifth sides 116, 114 and shifts by a second offset between the third and fourth sides 110, 112, liquid (e.g., water) directed through the respective tube 102 may experience different exhaust gas flows directed across the heat exchanger as the respective tube 102 switches between the external flow lanes 170.

In certain embodiments, as a respective tube 102 approaches the third side 110 or the fourth side 112, the spacing and/or the coupling 200 between the successive tubing portions 132 may change. Using tube 102K as an example, the first tubing portion 132k passes from the inlet header 120 to the second side 108 and couples to the second tubing portion 132k via the first coupling 200k. Because the second tubing portion 132k is positioned proximate the third side 110 of the tube bundle 104, the first coupling 200k may enable the second tubing portion 132k to be shifted across one or more external flow lanes 170 such that the second tubing side 182 of the second tubing portion 132k is disposed in an external flow lane 170x that is adjacent to the external flow lane 170v in which the first tubing side 180 of the first tubing portion 132k is disposed. Upon reaching the third side 110 of the tube bundle 104, the tube 102K may reverse directions of lane switching such that the third tubing portion 132k is offset from the second tubing portion 132k in the third direction 138 and in the fifth direction 142. Further, the third tubing portion 132k may be positioned in external flow lanes 170s, 170t that are not directly adjacent to the external flow lane 170x that the second tubing portion 132k is disposed in. In this way, the third tubing portion 132k is shifted across at least two external flow lanes (e.g., flow lane 170u, 170v) relative to the second tubing portion 132k.

As illustrated, each of the plurality of tubing portions 132 positioned along the third side 110 of the tube bundle 104 have the second tubing side 182 facing one of the plurality of external flow lanes (e.g., external flow lane 170x), and each of the plurality of tubing portions 132 positioned along the fourth side 112 of the tube bundle 104 have the first tubing side 180 facing one of the plurality of external flow lanes (e.g., external flow lane 170a). Additionally, each of the plurality of tubing portions 132 positioned between third and fourth sides 110, 112 (e.g., each particular tubing portion 132 not positioned directly adjacent the third side 110 or the fourth side 112, each particular tubing portion 132 that has at least one preceding tubing portion and/or at least one successive tubing portion 132 positioned between the particular tubing portion 132 and the third and/or fourth side 110, 112 of the tube bundle 104) have both the first and second tubing sides 180, 182 facing two different adjacent lanes 170 of the plurality of external flow lanes 170. For example, first tubing portion 132a of tube 102A has a tube 102O positioned between the first tubing portion 132a and the fourth side 112 of the tube bundle 104. Accordingly, the first tubing side 180 of the first tubing portion 132a is disposed in the external flow lane 170b, and the second tubing side 182 of the first tubing portion 132a is disposed in the external flow lane 170a adjacent the external flow lane 170b.

Thus, each successive tubing portion 132 of the plurality of tubing portions 132 in the sequence 133 switches lanes between the plurality of external flow lanes 170 relative to the preceding tubing portion 132 by shifting by a first offset (e.g., horizontal offset) between the third and fourth sides 110, 112 of the tube bundle 104. For example, each successive tubing portion may shift by a first offset between the third and fourth sides 110, 112 in the fourth direction 140 or the fifth direction 142 (e.g., horizontal direction) along the lateral axis 144 of the heat exchanger 100. Further, each successive tubing portion 132 may shift relative to the preceding tubing portion 132 by a second offset (e.g., vertical offset) between the fifth and sixth sides 114, 116 of the tube bundle 104. For example, each successive tubing portion 132 may shift by a second offset between the fifth and sixth sides 114, 116 in the third direction 138 (e.g., downward direction) along the vertical axis 142 of the heat exchanger 100. In certain embodiments, each successive tubing portion 132 of the plurality of tubing portions 132 in the sequence 133 switches lanes between the plurality of external flow lanes 170 relative to the preceding tubing portion 132 by shifting across at least one lane of the plurality of external flow lanes 170 when the successive or preceding tubing portion 132 is disposed along the third or fourth side 110, 112 of the tube bundle 104 and shifting across at least two lanes 170 of the plurality of external flow lanes 170 when the successive and preceding tubing portions of the plurality of tubing portions are not disposed along the third and fourth sides 110, 112 of the tube bundle 104.

Said another way, each successive tubing portion 132 of the plurality of tubing portions 132 in the sequence 133 switches lanes 170 between the plurality of external flow lanes 170 relative to the preceding tubing portion 132 of the plurality of tubing portions 132 by shifting across one or more lanes 170 of the plurality of external flow lanes in the fifth direction 142 from the third side 110 to the fourth side 112 of the tube bundle 104, shifting across one or more lanes 170 of the plurality of external flow lanes 170 in the fourth direction 140 from the fourth side 112 to the third side 110 of the tube bundle 104, reversing directions of lane shifting from the fifth direction 142 to the fourth direction 140 upon reaching the fourth side 112, and reversing directions of lane shifting from the fourth direction 140 to the fifth direction 142 upon reaching the third side 110 of the tube bundle 104.

Further, as noted above, while the tubes 102 of the tube bundle 104 are illustrated and described above as being associated with a sequence 133 in which each successive tubing portion 132 of a respective tube 102 is offset from a preceding tubing portion 132 in at least two directions (e.g., horizontal direction and a vertical direction, each respective tubing portion 132 in a sequence 133 is positioned in a different horizontal plane and a different vertical plane relative to a preceding tubing portion 132), in certain embodiments, one or more tubing portions 132 of a respective tube in a sequence 133 may be spaced (e.g., offset) from a preceding tubing portion 132 in only a single direction (e.g., horizontal direction, vertical direction). As an example, in certain embodiments, tube 102C may have a first tubing portion 132c that extends in the first direction 134 from the first side 106 to the second side 108 and a second tubing portion 132c that extends in the second direction 136 from the second side 108 to the first side 106. However, the second tubing portion 132c may only be spaced from the first tubing portion 132c in the third direction 138. That is, the second tubing portion 132c may not be spaced from the first tubing portion 132c in the fourth direction 140 or the fifth direction 142, and instead, may reside in the same external flow lane 170 (e.g., 170e, 170f) as the first tubing portion 132c.

As another example, tube 102L may have a first tubing portion 132L that extends in the first direction 134 from the first side 106 to the second side 108 and a second tubing portion 132L that extends in the second direction 136 from the second side 108 to the first side 106. However, the second tubing portion 132l may only be spaced from the first tubing portion 1321 in the third direction 138. That is, the second tubing portion 1321 may not be spaced from the first tubing portion 132l in the fourth direction 140 or the fifth direction 142, and instead, may reside in the same external flow lane 170 (e.g., 170x) as the first tubing portion 132l. As yet another example, tube 102H may have a first tubing portion 132h that extends in the first direction 134 from the first side 106 to the second side 108 and a second tubing portion 132h that extends in the second direction 136 from the second side 108 to the first side 106. However, the second tubing portion 132h may only be spaced from the first tubing portion 132h in the fourth direction 140 or the fifth direction 142. That is, the second tubing portion 132h may not be spaced from the first tubing portion 132h in the third direction 138, and instead, may reside in the same horizontal plane as the first tubing portion 132h (e.g., may reside in a different external flow lane, but in the same horizontal plane).

Further still, while the tubes 102 of the tube bundle 104 are illustrated and described above as being associated with a sequence 133 in which each successive tubing portion 132 of a respective tube 102 that is disposed between the third and fourth sides 110, 112 (e.g., not approaching the third side 110 or the fourth side 112) switches across at least two or more external flow lanes 170 such that first and second tubing sides 180, 182 of a successive tubing portion 132 are disposed in external flow lanes 170 that are not directly adjacent to an external flow lane 170 in which the first or second tubing sides 180, 182 of a preceding tubing portion 132 reside, one or more tubing portions 132 of a respective tube 102 in a sequence 133 disposed between the third and fourth sides 110, 112 may switch across less than two or more external flow lanes 170. That is, in certain embodiments, first and second tubing sides 180, 182 of a successive tubing portion 132 may be disposed in an external flow lane 170 that is directly adjacent to an external flow lane 170 in which a preceding tubing portion 132 resides. For example, tube 102C may have a first tubing portion 132c that extends in the first direction 134 from the first side 106 to the second side 108 and a second tubing portion 132c that extends in the second direction 136 from the second side 108 to the first side 106. The first tubing side 180 of the first tubing portion 132c may reside in external flow lane 170f. However, the second tubing portion 132c may only be spaced (e.g., offset) from the first tubing portion 132c in the third direction 138 and the fourth direction 140 such that the second tubing side 182 of the second tubing portion 132c resides in the external flow lane 170g (e.g., resides in the external flow lane 170 directly adjacent to the external flow lane in which at least part of a preceding tubing portion 132 resides).

It should also be appreciated that only a portion of the couplings 200 utilized to couple respective tubing portions 132 to one another are illustrated, and other embodiments may include any suitable number of couplings 200 to couple respective tubing portions 132 to one another. Further, it should be noted that the couplings 200 illustrated in FIGS. 6A and 6B are disposed on longitudinal ends of the tube bundle 104. That is, the couplings 200 are not in the plane of the figure, but rather are arranged at the first side 106 (shown in FIG. 6A) and the second side 108 (shown in FIG. 6B) of the tube bundle 104 to couple respective tubing portions 132 of a tube 102 to one another. Further still, while the couplings 200 are illustrated in FIGS. 6A and 6B as extending from the fins 190 of each of the respective tubing portions 132, this is merely intended to simplify illustration. For example, in an assembled configuration of the tube bundle 104, a respective coupling 200 may extend from an end of a preceding tubing portion 132 in a sequence 133 to an end of a successive tubing portion 132 in the sequence 133 such that liquid may flow from the interior of the preceding tubing portion 132, through the respective coupling 200, and into the interior of the successive tubing portion 132 in the sequence 133.

As discussed briefly above, FIG. 7 illustrates a plurality of tubing portions 132 having the first tubing side 180 facing the third side 110 of the tube bundle 104 and the second tubing side 182 facing the fourth side 112 of the tube bundle 104. FIG. 7 also illustrates a pair of couplings 200 between respective tubing portions 132 of a respective tube 102. In certain embodiments, for a respective tube 102 moving from the third side 110 to the fourth side 112 of the tube bundle 104, the coupling 200 may include a portion 202 that extends in both the third direction 138 and the fifth direction 142 at an angle 204 relative to the lateral axis 154. In this way, the coupling 200 may enable a particular tubing portion 132 to be spaced from a preceding tubing portion 132 in both the third direction 138 (e.g., downward direction) and the fifth direction 142 (e.g., horizontal direction). Similarly, for a respective tube 102 moving from the fourth side 112 to the third side 110 of the tube bundle 104, the coupling 200 may include a portion that extends in both the third direction 138 and the fourth direction 140 at an angle relative to the lateral axis 154. In this way, the coupling 200 may enable a particular tubing portion to be spaced or offset from a preceding tubing portion 132 in both the third direction 138 (e.g., downward direction) and the fourth direction 140 (e.g., horizontal direction).

As noted above, in certain embodiments, the coupling 200 may be a U-shaped bend or bent tubing portion that enables a successive tubing portion 132 of a respective tube 102 to be positioned in a different external flow lane than the preceding tubing portion 132 of the respective tube 102. Further, in certain embodiments, the tubing bend portion may be a wavy tubing portion, a zigzagging tubing portion, a variable radius tubing portion, a stepped bend portion, a variable height tubing portion (e.g., variable height relative to the side 106, 108), and the like. That is, certain embodiments may include couplings 200 that enable a plurality of respective heat exchange tubes 102 to switch between external flow lanes 170, thereby enabling increased heat transfer to liquid directed through the heat exchanger 100. Moreover, the couplings 200 may be of different shapes to facilitate interlacing of the couplings 200 at respective ends 106, 108 of the tube bundle 104, thereby maintaining a compact axial length of the tube bundle 104.

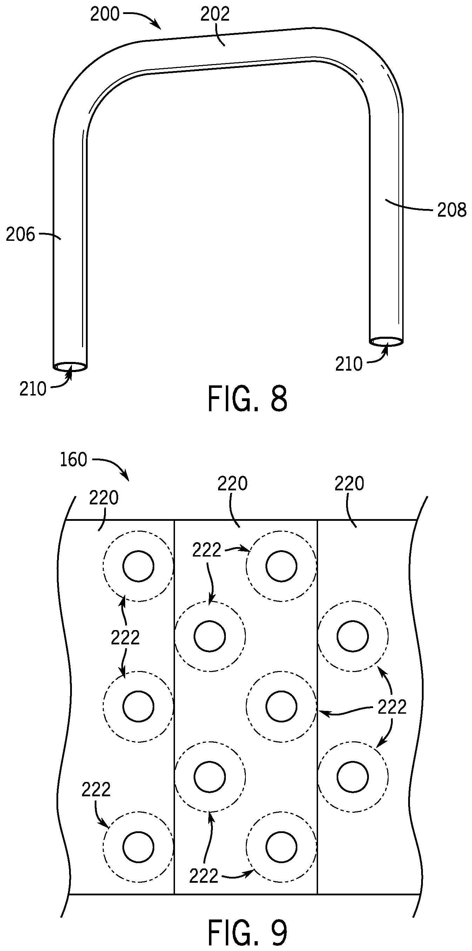

FIG. 8 is a perspective view of an embodiment of the coupling 200 of FIG. 7. As illustrated, the coupling 200 may include the portion 202 and a pair of extensions 206, 208. Each extension 206, 208 may include an orifice 210 (e.g., fluid port or opening) that enables fluid to pass from a respective tubing portion 132 through the first extension or second extension 206, 208, through the portion 202, and out of the first extension or second extension 206, 208 to a successive tubing portion 132 in the sequence 133. In an assembled configuration of the tube bundle 104, each of the pair of extensions 206, 208 may generally extend along the longitudinal axis 150 of the heat exchanger and may be coupled to a respective tubing portion 132 of a respective tube 102. For example, returning to FIG. 7, a first tubing portion 132 may reach the first end 106 of the tube bundle 104 and may be coupled to the first extension 206 extending in a direction (e.g., second direction 136) away from the first side 106 along the longitudinal axis 150. The first extension 206 may be coupled to the portion 202 such that as fluid is directed through the first extension 206, the fluid may travel through the first extension 206 and into the portion 202 toward the second extension 208. In turn, the second extension 208 may be coupled to a successive tubing portion 132 of the respective tube 102 in a direction (e.g., first direction 134) along the longitudinal axis 150 toward the first side 106 such that fluid directed through the portion 202 and toward the second extension 208 may return to the first side 106 of the tube bundle 104 and be directed toward the second side 108 of the tube bundle 104. It should be understood that first extension 206 and second extension 208 may be of different lengths and that variation in lengths of the first extension 206 and/or the second extension within the array of couplings 200 of the tube bundle 104 may be possible.

FIG. 9 is a perspective view of an embodiment of a section 220 of a respective support plate 160 that may be utilized to support the various tubes 102 in the tube bundle 104. As noted above, each support plate 160 may include a number of sections 220 that are coupled to one another (e.g., via welding or other suitable coupling mechanism) to form a single support plate 160. Each section 220 of the support plate 160 may include a plurality of openings 222 through which respective tubing portions 132 of a respective tube 102 pass therethrough. In certain embodiments, the openings 222 may be sized to accommodate both the respective tube 102 and the plurality of fins 190 extending from the respective tube 102. That is, in certain embodiments, a size of the opening 222 may be based on a total circumference of the tube 102 and the associated fin 190 attached to the tube 102. In other embodiments, a size of the opening 222 may be based on the circumference of the tube 102 alone. For example, in certain embodiments, the support plates 160 may be positioned between adjacent fins 190 of a respective tubing portion 132 such that the support plate may support a respective tube 102 in an area that does not include a fin 190. In such embodiments, a size of the opening 222 may be based on the circumference of the tube 102 alone. The support plates 160 may be made of any suitable material capable of supporting the weight of the tubes 102 in the tube bundle 104. Additionally, the support plate 160 may be manufactured from a material that is corrosive resistant, and/or heat resistant, thereby limiting an amount of wear and degradation on the support plate 160. In this way, maintenance and replacement costs associated with the tube bundle 104 may be reduced.

Technical effects of the invention include systems and methods for arranging tubes of a heat exchanger in a lane switching configuration, wherein successive tube portions of each tube shift across one or more external flow lanes to help improve the uniformity of heat transfer. Each of the tube portions also includes a plurality of fins (e.g., annular or disc-shaped fins), which may be laser welded onto the tube portions. The tubes also may be sized smaller, such as less than or equal to ¾ inch, 7/8 inch, or 1 inch in diameter (respectively, 1.90 cm, 2.22 cm, or 2.54 cm in diameter). The use of laser welding to attach the fins to the tubes helps to enable use of the smaller diameter tubes, which in turn improves the heat transfer in the heat exchanger. Accordingly, the disclosed embodiments may enable improved temperature distribution and more rapid heating of water to produce steam, which may further improve startup procedures for the CCPP (e.g., more rapid startup of the CCPP).

This written description uses examples to disclose the present heat exchanger and its components, including the best mode, and also to enable any person skilled in the art to practice the subject technology, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
a heat exchanger (100), comprising:
a plurality of tubes (102) arranged in a tube bundle (104) having opposite first and second sides (106, 108), opposite third and fourth sides (110, 112) extending from the first side (106) to the second side (108), and opposite fifth and sixth sides (114, 116) extending from the first side (106) to the second side (108), wherein the fifth and sixth sides (114, 116) extend between the third and fourth sides (110, 112); and
a plurality of external flow lanes (170) extending across the tube bundle (104) and between the fifth and the sixth sides (114, 116) outside of the plurality of tubes (102);
wherein each tube (102) of the plurality of tubes (102) comprises a plurality of tubing portions (132) extending in opposite first and second directions (134, 136) between the first and second sides (106, 108) in a sequence (133);
wherein at least one successive tubing portion (132) of the plurality of tubing portions (132) in the sequence (133) switches lanes (170) between the plurality of external flow lanes (170) relative to a preceding tubing portion (132) of the plurality of tubing portions (132); and
wherein at least one successive tubing portion (132) of the plurality of tubing portions (132) in the sequence (133) is offset relative to the preceding tubing portion (133) in a third direction (138) from the sixth side (116) to the fifth side (114) of the tube bundle (104);
**characterized in that** at least one successive tubing portion (132) of the plurality of tubing portions (132) in the sequence (133) switches lanes between the plurality of external flow lanes (170) relative to the preceding tubing portion (132) of the plurality of tubing portions (132) by:
shifting across one or more lanes of the plurality of external flow lanes (170) in a fourth direction (140) from the fourth side (112) to the third side (110) of the tube bundle (104); and
reversing directions of lane shifting from the fourth direction (140) to a fifth direction (142) from the third side (110) to the fourth side (112) of the tube bundle (104) upon reaching the third side (110).

2. The system of claim 1, wherein the plurality of tubing portions (132) comprises a first tubing side (180) facing the third side (110) of the tube bundle (104) and a second tubing side (182) facing the fourth side (112) of the tube bundle (104), wherein the plurality of tubing portions (132) along the third side (110) of the tube bundle (104) have the second tubing side (182) facing one of the plurality of external flow lanes (170), wherein the plurality of tubing portions (132) along the fourth side (112) of the tube bundle (104) have the first tubing side (180) facing one of the plurality of external flow lanes (170), wherein the plurality of tubing portions (132) between the third and fourth sides (110, 112) of the tube bundle (104) have both the first and second tubing sides (180, 182) facing different adjacent lanes (170) of the plurality of external flow lanes (170).

3. The system of claim 1 or 2, wherein at least one successive tubing portion (132) of the plurality of tubing portions (132) in the sequence (133) switches lanes between the plurality of external flow lanes (170) relative to the preceding tubing portion (132) of the plurality of tubing portions (132) by:
shifting by a first offset between the third and fourth sides (110, 112); and
shifting by a second offset between the fifth and sixth sides (114, 116).

4. The system of one of the preceding claims, wherein at least one successive tubing portion (132) of the plurality of tubing portions (132) in the sequence (133) switches lanes between the plurality of external flow lanes (170) relative to the preceding tubing portion (132) of the plurality of tubing portions (132) by:
shifting across at least one lane of the plurality of external flow lanes (170) when the successive or preceding tubing portion (132) of the plurality of tubing portions (132) is disposed along the third or fourth side (110, 112); and
shifting across at least two lanes of the plurality of external flow lanes (170) when the successive and preceding tubing portions (132) of the plurality of tubing portions (132) are not disposed along the third and fourth sides (110, 112).

5. The system of one of the preceding claims, wherein the plurality of tubes (102) comprise a first plurality of tubes (128) extending between a first inlet header (120) and a first outlet header (126), wherein the first inlet header (120) couples with the first plurality of tubes (128) at the sixth side (116) of the tube bundle (104), wherein the first outlet header (126) couples with the first plurality of tubes (128) at the fifth side (114) of the tube bundle (104), wherein at least one successive tubing portion (132) of the plurality of tubing portions (132) of the first plurality of tubes (128) in the sequence (133) switches lanes between the plurality of external flow lanes (170) relative to the preceding tubing portion (132) of the plurality of tubing portions (132) by shifting by a first offset between the third and fourth sides (110, 112) and by shifting by a second offset between the fifth and sixth sides (114, 116).

6. The system of one of the preceding claims, wherein the plurality of tubes (102) comprise a second plurality of tubes (130) extending between a second inlet header (122) and a second outlet header (124), wherein the second inlet header (122) couples with the second plurality of tubes (130) at the sixth side (116) of the tube bundle (104), wherein the second outlet header (124) couples with the second plurality of tubes (130) at the fifth side (114) of the tube bundle (104), wherein at least one successive tubing portion (132) of the plurality of tubing portions (132) of the second plurality of tubes (130) in the sequence (133) switches lanes between the plurality of external flow lanes (170) relative to the preceding tubing portion (132) of the plurality of tubing portions (132) by shifting by the first offset between the third and fourth sides (110, 112) and by shifting by the second offset between the fifth and sixth sides (114, 116), wherein the first and second inlet headers (120, 122) are disposed on the opposite first and second sides (106, 108) of the tube bundle (104), wherein the first and second outlet headers (126, 124) are disposed on the opposite first and second sides (106, 108) or the opposite second and first sides (108, 106) of the tube bundle (104).

7. The system of one of the preceding claims, wherein at least one successive tubing portion (132) of the plurality of tubing portions (132) in the sequence (133) is spaced in a third direction (138) and is spaced in one of opposite fourth and fifth directions (140, 142) relative to the preceding tubing portion (132) of the plurality of tubing portions (132) to switch positions along the plurality of external flow lanes (170), wherein the third, fourth, and fifth directions (138, 140, 142) are crosswise to the first and second directions (134, 136), wherein the fourth and fifth directions (140, 142) are parallel to one another, wherein the third direction (138) is crosswise to the fourth and fifth directions (140, 142), wherein the first, second, fourth, and fifth directions (134, 136, 140, 142) are horizontal, and wherein the third direction (138) and the plurality of external flow lanes (170) are vertical.

8. The system of one of the preceding claims, wherein the plurality of external flow lanes (170) are disposed between first and second planes (172), wherein the first and second planes (172) extend along centerlines (174) of different tubing portions (132) of the plurality of tubes (102).

9. The system of one of the preceding claims, wherein the plurality of tubing portions (132) comprise a plurality of fins (190) extending laterally into at least one adjacent lane of the plurality of external flow lanes (170), wherein the plurality of fins (190) comprises a plurality of annular fins (190) extending radially outward from an annular outer surface (184) of the plurality of tubing portions (132), and the plurality of annular fins (190) is arranged in series lengthwise along a centerline (174) of the plurality of tubing portions (132).

10. The system of one of the preceding claims, wherein successive tubing portions (132) of the plurality of tubing portions (132) in the sequence (133) are coupled to preceding tubing portions (132) of the plurality of tubing portions (132) via tubing bend portions (200) at the first or second side (106, 108).

11. The system of one of the preceding claims, wherein one or more tubing bend portions (200) extend across at least one lane of the plurality of external flow lanes (170) when the successive or preceding tubing portion (132) of the plurality of tubing portions (132) is disposed along the third or fourth side (110, 112), wherein one or more additional tubing bend portions (200) extend across at least two lanes of the plurality of external flow lanes (170) when the successive and preceding tubing portions (132) of the plurality of tubing portions (132) are not disposed along the third and fourth sides (110, 112).

12. The system of one of the preceding claims, wherein the heat exchanger (100) is a first heat exchanger (100) associated with a first pressure section (90), the system comprises a second heat exchanger (100) having a second plurality of tubes (102) associated with a second pressure section (70), and wherein at least a portion of the plurality of tubes (102) of the first heat exchanger (100) associated with the first pressure section (90) reside in the second pressure section (70).

13. A method, comprising:
assembling a plurality of tubes (102) of a heat exchanger (100) in a tube bundle (104) having opposite first and second sides (106, 108), opposite third and fourth sides (110, 112) extending from the first side (106) to the second side (108), and opposite fifth and sixth sides (114, 116) extending from the first side (106) to the second side (108), wherein the fifth and sixth sides (114, 116) extend between the third and fourth sides (110, 112);
providing a plurality of external flow lanes (170) extending across the tube bundle (104) and between the fifth and the sixth sides (114, 116) outside of the plurality of tubes (102); and
providing a lane switching arrangement of the plurality of tubes (102) relative to the plurality of external flow lanes (170), wherein the plurality of tubes (102) comprises a plurality of tubing portions (132) extending in opposite first and second directions (134, 136) between the first and second sides (106, 108) in a sequence (133), wherein one or more successive tubing portions (132) of the plurality of tubing portions (132) in the sequence (133) switches lanes between the plurality of external flow lanes (170) relative to a preceding tubing portion (132) of the plurality of tubing portions (132), and wherein at least one successive tubing portion (132) of the plurality of tubing portions (132) in the sequence (133) is offset relative to the preceding tubing portion (133) in a third direction (138) from the sixth side (116) to the fifth side (114) of the tube bundle (104);
**characterized in that** at least one successive tubing portion (132) of the plurality of tubing portions (132) in the sequence (133) switches lanes between the plurality of external flow lanes (170) relative to the preceding tubing portion (132) of the plurality of tubing portions (132) by:
shifting across one or more lanes of the plurality of external flow lanes (170) in a fourth direction (140) from the fourth side (112) to the third side (110) of the tube bundle (104); and
reversing directions of lane shifting from the fourth direction (140) to a fifth direction (142) from the third side (110) to the fourth side (112) of the tube bundle (104) upon reaching the third side (110).

14. A method of operating a system according to anyone of claims 1-12, comprising:
flowing a first fluid through the plurality of tubes (102) of the heat exchanger (100) in the tube bundle (104);
flowing a second fluid along the plurality of external flow lanes (170) extending across the tube bundle (104) and between the fifth and the sixth sides (114, 116) outside of the plurality of tubes (102); and
transferring heat between the first and second fluids via the lane switching arrangement of the plurality of tubes (102) relative to the plurality of external flow lanes (170).

## Patentansprüche

1. System, umfassend:
einen Wärmetauscher (100), umfassend:
eine Vielzahl von Rohren (102), die in einem Rohrbündel (104) angeordnet sind, das eine gegenüberliegende erste und zweite Seite (106, 108), eine gegenüberliegende dritte und vierte Seite (110, 112), die sich von der ersten Seite (106) zur zweiten Seite (108) erstrecken, und eine gegenüberliegende fünfte und sechste Seite (114, 116) aufweist, die sich von der ersten Seite (106) zur zweiten Seite (108) erstrecken, wobei sich die fünfte und die sechste Seite (114, 116) zwischen der dritten und der vierten Seite (110, 112) erstrecken; und
eine Vielzahl von externen Strömungskanälen (170), die sich quer über das Rohrbündel (104) und zwischen der fünften und der sechsten Seite (114, 116) außerhalb der Vielzahl von Rohren (102) erstrecken;
wobei jedes Rohr (102) aus der Vielzahl von Rohren (102) eine Vielzahl von Rohrabschnitten (132) umfasst, die sich in einer entgegengesetzten ersten und zweiten Richtung (134, 136) zwischen der ersten und der zweiten Seite (106, 108) in einer Sequenz (133) erstrecken;
wobei mindestens ein nachfolgender Rohrabschnitt (132) aus der Vielzahl von Rohrabschnitten (132) in der Sequenz (133) die Kanäle (170) zwischen der Vielzahl von externen Strömungskanälen (170) relativ zu einem vorhergehenden Rohrabschnitt (132) aus der Vielzahl von Rohrabschnitten (132) wechselt; und
wobei mindestens ein nachfolgender Rohrabschnitt (132) aus der Vielzahl von Rohrabschnitten (132) in der Sequenz (133) relativ zu dem vorhergehenden Rohrabschnitt (133) in einer dritten Richtung (138) von der sechsten Seite (116) zur fünften Seite (114) des Rohrbündels (104) versetzt ist;
**dadurch gekennzeichnet, dass** mindestens ein nachfolgender Rohrabschnitt (132) aus der Vielzahl von Rohrabschnitten (132) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) wechselt durch:
Verschieben über einen oder mehrere Kanäle aus der Vielzahl von externen Strömungskanälen (170) in einer vierten Richtung (140) von der vierten Seite (112) zur dritten Seite (110) des Rohrbündels (104); und
Umkehren der Richtung beim Verschieben des Kanals von der vierten Richtung (140) zu einer fünften Richtung (142) von der dritten Seite (110) zur vierten Seite (112) des Rohrbündels (104) beim Erreichen der dritten Seite (110).

2. System nach Anspruch 1, wobei die Vielzahl von Rohrabschnitten (132) eine erste Rohrseite (180), die der dritten Seite (110) des Rohrbündels (104) zugewandt ist, und eine zweite Rohrseite (182) umfasst, die der vierten Seite (112) des Rohrbündels (104) zugewandt ist, wobei die Vielzahl von Rohrabschnitten (132) entlang der dritten Seite (110) des Rohrbündels (104) die zweite Rohrseite (182) aufweisen, die einem aus der Vielzahl von externen Strömungskanälen (170) zugewandt ist, wobei die Vielzahl von Rohrabschnitten (132) entlang der vierten Seite (112) des Rohrbündels (104) die erste Rohrseite (180) aufweisen, die einem aus der Vielzahl von externen Strömungskanälen (170) zugewandt ist, wobei die Vielzahl von Rohrabschnitten (132) zwischen der dritten und der vierten Seite (110, 112) des Rohrbündels (104) sowohl die erste als auch die zweite Rohrseite (180, 182) aufweisen, die verschiedenen benachbarten Kanälen (170) aus der Vielzahl von externen Strömungskanälen (170) zugewandt sind.

3. System nach Anspruch 1 oder 2, wobei mindestens ein nachfolgender Rohrabschnitt (132) aus der Vielzahl von Rohrabschnitten (132) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) wechselt durch:
Verschieben um einen ersten Versatz zwischen der dritten und der vierten Seite (110, 112); und
Verschieben um einen zweiten Versatz zwischen der fünften und der sechsten Seite (114, 116).

4. System nach einem der vorstehenden Ansprüche, wobei mindestens ein nachfolgender Rohrabschnitt (132) aus der Vielzahl von Rohrabschnitten (132) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) wechselt durch:
Verschieben über mindestens einen Kanal aus der Vielzahl von externen Strömungskanälen (170), wenn der nachfolgende oder der vorhergehende Rohrabschnitt (132) aus der Vielzahl von Rohrabschnitten (132) entlang der dritten oder der vierten Seite (110, 112) angeordnet ist; und
Verschieben über mindestens zwei Kanäle aus der Vielzahl von externen Strömungskanälen (170), wenn der nachfolgende und der vorhergehenden Rohrabschnitt (132) aus der Vielzahl von Rohrabschnitten (132) nicht entlang der dritten und der vierten Seite (110, 112) angeordnet sind.

5. System nach einem der vorstehenden Ansprüche, wobei die Vielzahl von Rohren (102) eine erste Vielzahl von Rohren (128) umfassen, die sich zwischen einem ersten Einlasskopf (120) und einem ersten Auslasskopf (126) erstrecken, wobei der erste Einlasskopf (120) mit der ersten Vielzahl von Rohren (128) an der sechsten Seite (116) des Rohrbündels (104) gekoppelt ist, wobei der erste Auslasskopf (126) mit der ersten Vielzahl von Rohren (128) an der fünften Seite (114) des Rohrbündels (104) gekoppelt ist, wobei mindestens ein nachfolgender Rohrabschnitt (132) aus der Vielzahl von Rohrabschnitten (132) der ersten Vielzahl von Rohren (128) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) durch Verschieben um einen ersten Versatz zwischen der dritten und der vierten Seite (110, 112) und durch Verschieben um einen zweiten Versatz zwischen der fünften und der sechsten Seite (114, 116) wechselt.

6. System nach einem der vorstehenden Ansprüche, wobei die Vielzahl von Rohren (102) eine zweite Vielzahl von Rohren (130) umfassen, die sich zwischen einem zweiten Einlasskopf (122) und einem zweiten Auslasskopf (124) erstrecken, wobei der zweite Einlasskopf (122) mit der zweiten Vielzahl von Rohren (130) an der sechsten Seite (116) des Rohrbündels (104) gekoppelt ist, wobei der zweite Auslasskopf (124) mit der zweiten Vielzahl von Rohren (130) an der fünften Seite (114) des Rohrbündels (104) gekoppelt ist, wobei mindestens ein nachfolgender Rohrabschnitt (132) aus der Vielzahl von Rohrabschnitten (132) der zweiten Vielzahl von Rohren (130) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) durch Verschieben um den ersten Versatz zwischen der dritten und der vierten Seite (110, 112) und durch Verschieben um den zweiten Versatz zwischen der fünften und der sechsten Seite (114, 116) wechselt, wobei der erste und der zweite Einlasskopf (120, 122) auf der gegenüberliegenden ersten und zweiten Seite (106, 108) des Rohrbündels (104) angeordnet sind, wobei der erste und der zweite Auslasskopf (126, 124) auf der gegenüberliegenden ersten und zweiten Seite (106, 108) oder der gegenüberliegenden zweiten und ersten Seite (108, 106) des Rohrbündels (104) angeordnet sind.

7. System nach einem der vorstehenden Ansprüche, wobei mindestens ein nachfolgender Rohrabschnitt (132) aus der Vielzahl von Rohrabschnitten (132) in der Sequenz (133) in einer dritten Richtung (138) beabstandet ist und in einer von einer entgegengesetzten vierten und fünften Richtung (140, 142) relativ zu dem vorhergehenden Rohrabschnitt (132) aus der Vielzahl von Rohrabschnitten (132) beabstandet ist, um entlang der Vielzahl von externen Strömungskanälen (170) die Positionen zu wechseln, wobei die dritte, die vierte und die fünfte Richtung (138, 140, 142) quer zu der ersten und der zweiten Richtung (134, 136) verlaufen, wobei die vierte und die fünfte Richtung (140, 142) parallel zueinander verlaufen, wobei die dritte Richtung (138) quer zu der vierten und der fünften Richtung (140, 142) verläuft, wobei die erste, die zweite, die vierte und die fünfte Richtung (134, 136, 140, 142) horizontal verlaufen und wobei die dritte Richtung (138) und die Vielzahl von externen Strömungskanälen (170) vertikal verlaufen.

8. System nach einem der vorstehenden Ansprüche, wobei die Vielzahl von externen Strömungskanälen (170) zwischen einer ersten und einer zweiten Ebene (172) angeordnet sind, wobei sich die erste und die zweite Ebene (172) entlang der Mittellinien (174) verschiedener Rohrabschnitte (132) der Vielzahl von Rohren (102) erstrecken.

9. System nach einem der vorstehenden Ansprüche, wobei die Vielzahl von Rohrabschnitten (132) eine Vielzahl von Rippen (190) umfasst, die sich seitlich in mindestens einen benachbarten Kanal aus der Vielzahl von externen Strömungskanälen (170) erstrecken, wobei die Vielzahl von Rippen (190) eine Vielzahl von ringförmigen Rippen (190) umfasst, die sich radial nach außen von einer ringförmigen Außenoberfläche (184) der Vielzahl von Rohrabschnitten (132) erstrecken, und die Vielzahl von ringförmigen Rippen (190) in Reihe längs entlang einer Mittellinie (174) der Vielzahl von Rohrabschnitten (132) angeordnet ist.

10. System nach einem der vorstehenden Ansprüche, wobei nachfolgende Rohrabschnitte (132) aus der Vielzahl von Rohrabschnitten (132) in der Sequenz (133) mit vorhergehenden Rohrabschnitten (132) aus der Vielzahl von Rohrabschnitten (132) über Rohrbogenabschnitte (200) an der ersten oder der zweiten Seite (106, 108) gekoppelt sind.

11. System nach einem der vorstehenden Ansprüche, wobei sich ein oder mehrere Rohrbogenabschnitte (200) über mindestens einen Kanal aus der Vielzahl von externen Strömungskanälen (170) erstrecken, wenn der nachfolgende oder der vorhergehende Rohrabschnitt (132) aus der Vielzahl von Rohrabschnitten (132) entlang der dritten oder der vierten Seite (110, 112) angeordnet ist, wobei sich ein oder mehrere zusätzliche Rohrbogenabschnitte (200) über mindestens zwei Kanäle aus der Vielzahl von externen Strömungskanälen (170) erstrecken, wenn der nachfolgende und der vorhergehende Rohrabschnitt (132) aus der Vielzahl von Rohrabschnitten (132) nicht entlang der dritten und der vierten Seite (110, 112) angeordnet sind.

12. System nach einem der vorstehenden Ansprüche, wobei der Wärmetauscher (100) ein erster Wärmetauscher (100) ist, der mit einem ersten Druckabschnitt (90) verbunden ist, das System einen zweiten Wärmetauscher (100) umfasst, der eine zweite Vielzahl von Rohren (102) aufweist, die mit einem zweiten Druckabschnitt (70) verbunden sind, und wobei sich mindestens ein Abschnitt der Vielzahl von Rohren (102) des ersten Wärmetauschers (100), der mit dem ersten Druckabschnitt (90) verbunden ist, in dem zweiten Druckabschnitt (70) befindet.

13. Verfahren, umfassend:
Zusammenbauen einer Vielzahl von Rohren (102) eines Wärmetauschers (100) in einem Rohrbündel (104), das eine gegenüberliegende erste und zweite Seite (106, 108), eine gegenüberliegende dritte und vierte Seite (110, 112), die sich von der ersten Seite (106) zur zweiten Seite (108) erstrecken, und eine gegenüberliegende fünfte und sechste Seite (114, 116) aufweist, die sich von der ersten Seite (106) zur zweiten Seite (108) erstrecken, wobei sich die fünfte und die sechste Seite (114, 116) zwischen der dritten und der vierten Seite (110, 112) erstrecken;
Bereitstellen einer Vielzahl von externen Strömungskanälen (170), die sich quer über das Rohrbündel (104) und zwischen der fünften und der sechsten Seite (114, 116) außerhalb der Vielzahl von Rohren (102) erstrecken; und
Bereitstellen einer Kanalwechselanordnung der Vielzahl von Rohren (102) relativ zu der Vielzahl von externen Strömungskanälen (170), wobei die Vielzahl von Rohren (102) eine Vielzahl von Rohrabschnitten (132) umfasst, die sich in einer entgegengesetzten ersten und zweiten Richtung (134, 136) zwischen der ersten und der zweiten Seite (106, 108) in einer Sequenz (133) erstrecken, wobei ein oder mehrere nachfolgende Rohrabschnitte (132) aus der Vielzahl von Rohrabschnitten (132) in der Sequenz (133) die Kanäle zwischen der Vielzahl von externen Strömungskanälen (170) relativ zu einem vorhergehenden Rohrabschnitt (132) aus der Vielzahl von Rohrabschnitten (132) wechselt, und wobei mindestens ein nachfolgender Rohrabschnitt (132) aus der Vielzahl von Rohrabschnitten (132) in der Sequenz (133) relativ zu dem vorhergehenden Rohrabschnitt (133) in einer dritten Richtung (138) von der sechsten Seite (116) zu der fünften Seite (114) des Rohrbündels (104) versetzt ist;
**dadurch gekennzeichnet, dass** mindestens ein nachfolgender Rohrabschnitt (132) aus der Vielzahl von Rohrabschnitten (132) in der Sequenz (133) die Kanäle zwischen der Vielzahl von externen Strömungskanälen (170) relativ zu dem vorhergehenden Rohrabschnitt (132) aus der Vielzahl von Rohrabschnitten (132) wechselt durch:
Verschieben über einen oder mehrere Kanäle aus der Vielzahl von externen Strömungskanälen (170) in einer vierten Richtung (140) von der vierten Seite (112) zur dritten Seite (110) des Rohrbündels (104); und
Umkehren der Richtung beim Verschieben des Kanals von der vierten Richtung (140) zu einer fünften Richtung (142) von der dritten Seite (110) zur vierten Seite (112) des Rohrbündels (104) beim Erreichen der dritten Seite (110).

14. Verfahren zum Betreiben eines Systems nach einem der Ansprüche 1 bis 12, umfassend:
Strömen einer ersten Flüssigkeit durch die Vielzahl von Rohren (102) des Wärmetauschers (100) in dem Rohrbündel (104);
Strömen einer zweiten Flüssigkeit entlang der Vielzahl von externen Strömungskanälen (170), die sich quer über das Rohrbündel (104) und zwischen der fünften und der sechsten Seite (114, 116) außerhalb der Vielzahl von Rohren (102) erstrecken; und
Übertragen von Wärme zwischen der ersten und der zweiten Flüssigkeit über die Kanalwechselanordnung der Vielzahl von Rohren (102) relativ zu der Vielzahl von externen Strömungskanälen (170).

## Revendications

1. Système, comprenant :
Échangeur de chaleur (100), comprenant :
une pluralité de tubes (102) agencés dans un faisceau de tubes (104) ayant des premier et deuxième côtés opposés (106, 108), des troisième et quatrième côtés opposés (110, 112) s'étendant du premier côté (106) au deuxième côté (108), et des cinquième et sixième côtés opposés (114, 116) s'étendant du premier côté (106) au deuxième côté (108), dans lequel les cinquième et sixième côtés (114, 116) s'étendent entre les troisième et quatrième côtés (110, 112) ; et
une pluralité de voies d'écoulement externes (170) s'étendant à travers le faisceau de tubes (104) et entre les cinquième et sixième côtés (114, 116) à l'extérieur de la pluralité de tubes (102) ;
dans lequel chaque tube (102) de la pluralité de tubes (102) comprend une pluralité de portions de tube (132) s'étendant dans les première et deuxième directions opposées (134, 136) entre les premier et deuxième côtés (106, 108) dans une séquence (133) ;
dans lequel au moins une portion de tube (132) successive de la pluralité de portions de tube (132) dans la séquence (133) commute les voies (170) entre la pluralité de voies d'écoulement externes (170) par rapport à une portion de tube (132) précédente de la pluralité de portions de tube (132) ; et
dans lequel au moins une portion de tube (132) successive de la pluralité de portions de tube (132) dans la séquence (133) est décalée par rapport à la portion de tube (133) précédente dans une troisième direction (138) du sixième côté (116) au cinquième côté (114) du faisceau de tubes (104) ;
**caractérisé en ce qu'**au moins une portion de tube (132) successive de la pluralité de portions de tube (132) dans la séquence (133) change de voie entre la pluralité de voies d'écoulement externes (170) par rapport à la portion de tube (132) précédente de la pluralité de portions de tube (132) par :
le déplacement sur une ou plusieurs voies de la pluralité de voies d'écoulement externes (170) dans une quatrième direction (140) du quatrième côté (112) au troisième côté (110) du faisceau de tubes (104) ; et
l'inversement des directions de changement de voie de la quatrième direction (140) à une cinquième direction (142) du troisième côté (110) au quatrième côté (112) du faisceau de tubes (104) en atteignant le troisième côté (110).

2. Système selon la revendication 1, dans lequel la pluralité de portions de tube (132) comprend un premier côté de tube (180) faisant face au troisième côté (110) du faisceau de tubes (104) et un deuxième côté de tube (182) faisant face au quatrième côté (112) du faisceau de tubes (104), dans lequel la pluralité de portions de tube (132) le long du troisième côté (110) du faisceau de tubes (104) ont le deuxième côté de tube (182) faisant face à l'une de la pluralité de voies d'écoulement externes (170), dans lequel la pluralité de portions de tube (132) le long du quatrième côté (112) du faisceau de tubes (104) ont le premier côté de tubes (180) orienté vers l'une de la pluralité de voies d'écoulement externes (170), dans lequel la pluralité de portions de tube (132) entre les troisième et quatrième côtés (110, 112) du faisceau de tubes (104) ont à la fois les premier et deuxième côtés de tube (180, 182) orientés vers différentes voies adjacentes (170) de la pluralité de voies d'écoulement externes (170).

3. Système selon la revendication 1 ou 2, dans lequel au moins une portion de tube (132) successive de la pluralité de portions de tube (132) dans la séquence (133) change de voie entre la pluralité de voies d'écoulement externes (170) par rapport à la portion de tube (132) précédente de la pluralité de portions de tube (132) par :
le décalage d'un premier décalage entre les troisième et quatrième côtés (110, 112) ; et
le décalage d'un second décalage entre les cinquième et sixième côtés (114, 116).

4. Système selon l'une des revendications précédentes, dans lequel au moins une portion de tube (132) successive de la pluralité de portions de tube (132) dans la séquence (133) change de voie entre la pluralité de voies d'écoulement externes (170) par rapport à la portion de tube (132) précédente de la pluralité de portions de tube (132) par :
le décalage sur au moins une voie de la pluralité de voies d'écoulement externes (170) lorsque la portion de tube (132) successive ou précédente de la pluralité de portions de tube (132) est disposée le long des troisième ou quatrième côtés (110, 112) ; et
le décalage sur au moins deux voies de la pluralité de voies d'écoulement externes (170) lorsque les portions de tube (132) successives et précédentes de la pluralité de portions de tube (132) ne sont pas disposées le long des troisième et quatrième côtés (110, 112).

5. Système selon l'une des revendications précédentes, dans lequel la pluralité de tubes (102) comprend une première pluralité de tubes (128) s'étendant entre un premier collecteur d'entrée (120) et un premier collecteur de sortie (126), dans lequel le premier collecteur d'entrée (120) s'accouple à la première pluralité de tubes (128) au sixième côté (116) du faisceau de tubes (104), dans lequel le premier collecteur de sortie (126) s'accouple à la première pluralité de tubes (128) au cinquième côté (114) du faisceau de tubes (104), dans lequel au moins une portion de tube (132) successive de la pluralité de portions de tube (132) de la première pluralité de tubes (128) dans la séquence (133) change de voie entre la pluralité de voies d'écoulement externes (170) par rapport à la portion de tube (132) précédente de la pluralité de portions de tube (132) en se décalant d'un premier décalage entre les troisième et quatrième côtés (110, 112) et en se décalant d'un second décalage entre les cinquième et sixième côtés (114, 116).

6. Système selon l'une des revendications précédentes, dans lequel la pluralité de tubes (102) comprend une deuxième pluralité de tubes (130) s'étendant entre un deuxième collecteur d'entrée (122) et un deuxième collecteur de sortie (124), dans lequel le deuxième collecteur d'entrée (122) s'accouple à la deuxième pluralité de tubes (130) au sixième côté (116) du faisceau de tubes (104), dans lequel le deuxième collecteur de sortie (124) s'accouple à la deuxième pluralité de tubes (130) au cinquième côté (114) du faisceau de tubes (104), dans lequel au moins une portion de tube (132) successive de la pluralité de portions de tube (132) de la deuxième pluralité de tubes (130) dans la séquence (133) change de voie entre la pluralité de voies d'écoulement externes (170) par rapport à la portion de tube (132) précédente de la pluralité de portions de tube (132) en se décalant du premier décalage entre les troisième et quatrième côtés (110, 112) et en se décalant du second décalage entre les cinquième et sixième côtés (114, 116), dans lequel les premier et second collecteurs d'entrée (120, 122) sont disposés sur les premier et second côtés opposés (106, 108) du faisceau de tubes (104), dans lequel les premier et second collecteurs de sortie (126, 124) sont disposés sur les premier et second côtés opposés (106, 108) ou sur les second et premier côtés opposés (108, 106) du faisceau de tubes (104).

7. Système selon l'une des revendications précédentes, dans lequel au moins une portion de tube (132) successive de la pluralité de portions de tube (132) dans la séquence (133) est espacée dans une troisième direction (138) et est espacée dans l'une des quatrième et cinquième directions opposées (140, 142) par rapport à la portion de tube (132) précédente de la pluralité de portions de tube (132) pour changer de position le long de la pluralité de voies d'écoulement externes (170), dans lequel les troisième, quatrième, et cinquième directions (138, 140, 142) sont transversales aux première et deuxième directions (134, 136), où les quatrième et cinquième directions (140, 142) sont parallèles l'une à l'autre, où la troisième direction (138) est transversale aux quatrième et cinquième directions (140, 142), où les première, deuxième, quatrième et cinquième directions (134, 136, 140, 142) sont horizontales, et dans lequel la troisième direction (138) et la pluralité de voies d'écoulement externes (170) sont verticales.

8. Système selon l'une des revendications précédentes, dans lequel la pluralité de voies d'écoulement externes (170) sont agencées entre les premier et second plans (172), dans lequel les premier et second plans (172) s'étendent le long des lignes centrales (174) de différentes portions de tube (132) de la pluralité de tubes (102).

9. Système selon l'une des revendications précédentes, dans lequel la pluralité de portions de tube (132) comprend une pluralité d'ailettes (190) s'étendant latéralement dans au moins une voie adjacente de la pluralité de voies d'écoulement externes (170), dans lequel la pluralité d'ailettes (190) comprend une pluralité d'ailettes annulaires (190) s'étendant radialement vers l'extérieur à partir d'une surface extérieure annulaire (184) de la pluralité de portions de tube (132), et la pluralité d'ailettes annulaires (190) est agencée en série dans le sens de la longueur le long d'une ligne centrale (174) de la pluralité de portions de tubes (132).

10. Système selon l'une des revendications précédentes, dans lequel les portions de tube successives (132) de la pluralité de portions de tube (132) dans la séquence (133) sont couplées aux portions de tube précédentes (132) de la pluralité de portions de tube (132) par l'intermédiaire de portions de courbure de tubes (200) sur les premier ou deuxième côtés (106, 108).

11. Système selon l'une des revendications précédentes, dans lequel une ou plusieurs portions de courbure de tube (200) s'étendent à travers au moins une voie de la pluralité de voies d'écoulement externes (170) lorsque la portion de tube (132) successive ou précédente de la pluralité de portions de tube (132) est agencée le long des troisième ou quatrième côtés (110, 112), dans lequel une ou plusieurs portions de courbure de tube supplémentaires (200) s'étendent sur au moins deux voies de la pluralité de voies d'écoulement externes (170) lorsque les portions de tube (132) successive et précédente de la pluralité de portions de tube (132) ne sont pas disposées le long des troisième et quatrième côtés (110, 112).

12. Système selon l'une des revendications précédentes, dans lequel l'échangeur de chaleur (100) est un premier échangeur de chaleur (100) associé à une première section de pression (90), le système comprend un second échangeur de chaleur (100) ayant une seconde pluralité de tubes (102) associés à une seconde section de pression (70), et dans lequel au moins une partie de la pluralité de tubes (102) du premier échangeur de chaleur (100) associé à la première section de pression (90) réside dans la seconde section de pression (70).

13. Procédé, comprenant :
l'assemblage d'une pluralité de tubes (102) d'un échangeur de chaleur (100) dans un faisceau de tubes (104) ayant des premier et deuxième côtés opposés (106, 108), des troisième et quatrième côtés opposés (110, 112) s'étendant du premier côté (106) au deuxième côté (108), et des cinquième et sixième côtés opposés (114, 116) s'étendant du premier côté (106) au deuxième côté (108), dans lequel les cinquième et sixième côtés (114, 116) s'étendent entre les troisième et quatrième côtés (110, 112) ;
la fourniture d'une pluralité de voies d'écoulement externes (170) s'étendant à travers le faisceau de tubes (104) et entre les cinquième et sixième côtés (114, 116) à l'extérieur de la pluralité de tubes (102) ; et
la fourniture d'un agencement de commutation de voie de la pluralité de tubes (102) par rapport à la pluralité de voies d'écoulement externes (170), dans lequel la pluralité de tubes (102) comprend une pluralité de portions de tube (132) s'étendant dans les première et deuxième directions opposées (134, 136) entre les premier et deuxième côtés (106, 108) dans une séquence (133), dans lequel une ou plusieurs portions de tube successives (132) de la pluralité de portions de tube (132) dans la séquence (133) change de voie entre la pluralité de voies d'écoulement externes (170) par rapport à une portion de tube (132) précédente de la pluralité de portions de tube (132), et dans lequel au moins une portion de tube (132) successive de la pluralité de portions de tube (132) dans la séquence (133) est décalée par rapport à la portion de tube (133) précédente dans une troisième direction (138) du sixième côté (116) au cinquième côté (114) du faisceau de tubes (104) ;
**caractérisé en ce qu'**au moins une portion de tube (132) successive de la pluralité de portions de tube (132) dans la séquence (133) change de voie entre la pluralité de voies d'écoulement externes (170) par rapport à la portion de tube (132) précédente de la pluralité de portions de tube (132) par :
le déplacement sur une ou plusieurs voies de la pluralité de voies d'écoulement externes (170) dans une quatrième direction (140) du quatrième côté (112) au troisième côté (110) du faisceau de tubes (104) ; et
l'inversement des directions de changement de voie de la quatrième direction (140) à une cinquième direction (142) du troisième côté (110) au quatrième côté (112) du faisceau de tubes (104) en atteignant le troisième côté (110).

14. Procédé d'exploitation d'un système selon l'une quelconque des revendications 1 à 12, comprenant :
l'écoulement d'un premier fluide à travers la pluralité de tubes (102) de l'échangeur de chaleur (100) dans le faisceau de tubes (104) ;
l'écoulement d'un second fluide le long de la pluralité de voies d'écoulement externes (170) s'étendant à travers le faisceau de tubes (104) et entre les cinquième et sixième côtés (114, 116) à l'extérieur de la pluralité de tubes (102) ; et
le transfert de chaleur entre les premier et second fluides par l'intermédiaire de l'agencement de commutation de voies de la pluralité de tubes (102) par rapport à la pluralité de voies d'écoulement externes (170).
